# EUROPÄISCHE PATENTSCHRIFT

(11) **EP 4 282 794 B1**
(45) Veröffentlichungstag und Bekanntmachung des Hinweises auf die Patenterteilung: **28.01.2026**
(21) Anmeldenummer: 23174441.8
(22) Anmeldetag: 22.05.2023
(51) Int. Cl.: B65G 60/00, B65G 65/00

(54) **STAPELEINRICHTUNG UND STAPELVERFAHREN**
STACKING DEVICE AND STACKING METHOD
DISPOSITIF ET PROCÉDÉ D'EMPILEMENT

(30) Priorität: 25.05.2022 DE 202022102911 U; 01.02.2023 DE 102023102493
(43) Veröffentlichungstag der Anmeldung: 29.11.2023
(73) Patentinhaber: AUTEFA Solutions Germany GmbH, 86316 Friedberg (DE)
(72) Erfinder: Hiesch, Robert, 86199 Augsburg (DE)
(74) Vertreter: ERNICKE Patent- und Rechtsanwälte PartmbB

(56) Entgegenhaltungen:
- WO-A1-2015/128452
- DE-U1- 202013 103 400
- FR-A1- 2 027 346

## Beschreibung

Die Erfindung betrifft eine Stapeleinrichtung und ein Stapelverfahren sowie eine Speicherinrichtung und eine Behandlungsanlage mit den Merkmalen im Oberbegriff der selbstständigen Ansprüchen.

Die FR 2 027 346 A1, welche den Oberbegriff des Anspruchs 1 offenbart, zeigt eine Stapeleinrichtung und ein Verfahren zum Entstapeln bzw. sog. Depalettieren einer Palette mit Flaschenlagen und Stülpdeckeln aus Karton. Die Palette mit Flaschenlagen wird auf einer Rollenbahn einem Hubtisch zugeführt, dort abgestellt und vom Hubtisch schrittweise angehoben. Beim Depalettieren wird die jeweils oberste Flaschenlage mit ihrem Stülpdeckel von einem per Kette angetriebenen Schiebebalken auf eine Plattform überschoben, wobei anschließend der Stülpdeckel von einem Vakuumgreifer von der Flaschenlage abgehoben und neben der Stapeleinrichtung abgelegt und entsorgt wird. Die vom Stülpdeckel befreite Flaschenlage wird anschließend auf ein Förderband abgeschoben. Das Abschieben erfolgt durch die nächste depalletierte Flaschenlage, welche die vorherige Flaschenlage wegschiebt.

Die DE 20 2013 103 400 U1 befasst sich ebenfalls mit einem Depalettierer, der von einer zugeführten Palette auf Zwischenböden stehende Flaschenlagen mit einem Lagenschieber und einem verstellbaren Halterahmen auf einen Hubboden abschiebt und die Zwischenböden mit einer Entsorgungseinrichtung entfernt.

Eine andere Stapeleinrichtung nebst Stapelverfahren sind aus der WO 2015/128452 A1 bekannt. Hierbei sind eine Stapelstelle für einen einzelnen stationären Behälterstapel, eine Ladestelle für Zu- und Abfuhr von Warenlagen und eine Handhabungseinrichtung mit einem mehrachsig beweglichen Handlinggerät für die Handhabung und das Verschieben der unten offenen Stülpbehälter und für eine darin jeweils aufgenommene Warenlage vorgesehen.

Es ist Aufgabe der vorliegenden Erfindung, die vorbekannte Stapeltechnik hinsichtlich ihrer Einsatzmöglichkeiten sowie qualitativ zu verbessern.

Die Erfindung löst diese Aufgabe mit den Merkmalen in den selbstständigen Ansprüchen.

Die beanspruchte Stapeltechnik, d.h. die Stapeleinrichtung, das Stapelverfahren, die Speichereinrichtung und die Behandlungsanlage haben verschiedene Vorteile.

Die beanspruchte Stapeltechnik für Waren in Form von Warenlagen, umfasst in einem Erfindungsaspekt eine Ladestelle für die Zufuhr und/oder Abfuhr von Warenlagen, eine Stapelstelle für die Anordnung eines Behälterstapels und eine zwischen der Stapelstelle und der Ladesstelle angeordnete Handhabungseinrichtung. Der Behälterstapel umfasst zumindest einen mobilen Stapelträger und darauf aufgestapelte kastenartige, an der Unterseite offene und aufeinander stapelbare Stülpbehälter. Die Handhabungseinrichtung handhabt die an der Unterseite offenen Stülpbehälter in dieser nach unten offen Lage und verschiebt diese mitsamt einer jeweils darin aufgenommenen Warenlage von der Stapelstelle zur Ladestelle und/oder von der Ladestelle zur Stapelstelle.

Die Warenlage kann dabei von dem gehandhabten Stülpbehälter mitgenommen und auf einer Stützfläche, z.B. einem Tragboden der Handhabungseinrichtung, stehend verschoben werden. Der Stülpbehälter kann beim Verschieben ebenfalls auf der Stützfläche aufliegen oder kann mit Abstand darüber schweben. Die Mitnahme und das Verschieben der Warenlage kann auch von einem zusätzlichen Lagenhalter bewirkt werden. Der Stülpbehälter kann dabei synchron mitbewegt werden.

Die Stapeltechnik umfasst ferner einen gesteuert beweglichen Stapeltransporter, der an der Stapelstelle abwechselnd einen befüllten Behälterstapel aus Stülpbehältern mit jeweils einer darin aufgenommenen Warenlagen und einen puffernden Behälterstapel aus leeren Stülpbehältern anordnet. Dieses Anordnen kann ein Positionieren der befüllten und der puffernden Behälterstapel an der Stapelstelle umfassen. Die Stapelstelle ist ein bevorzugt stationärer Ort an der Stapeleinrichtung. Die Ladestelle kann ebenfalls ein bevorzugt stationärer Ort an der Stapeleinrichtung sein. Der Stapeltransporter kann zumindest einen sog. befüllten Behälterstapel und zumindest einen sog. leeren Behälterstapel aufnehmen. Der Stapeltransporter weist hierfür geeignete Stapelaufnahmen auf.

Für die beanspruchte Stapeltechnik und deren Funktionen ist die Ausbildung des Stapeltransporters mit mindestens zwei nebeneinander angeordneten und abwechselnd an der Stapelstelle positionierbaren Stapelaufnahmen vorteilhaft. Die Stapelaufnahmen sind z.B. in Bewegungsrichtung des Stapeltransporters hintereinander angeordnet. Eine der Stapelaufnahmen ist für einen befüllten Behälterstapel und eine andere Stapelaufnahme für einen puffernden Behälterstapel vorgesehen.

An der Stapelstelle kann der betreffende Behälterstapel durch Übergabe von Stülpbehältern aufgebaut oder durch Entnahme von Stülpbehältern abgebaut werden. Die Stülpbehälter können dabei leer oder mit einer aufgenommenen Warenlage befüllt sein. An der Ladestelle können Warenlagen zugeführt und/oder abgeführt werden. Die Warenlagen können auch an der Ladestelle gebildet und/oder aufgelöst werden, z.B. in einzelne Warenreihen.

Die Handhabungseinrichtung kann an der Stapelstelle einen mit einer Warenlage befüllten und mit der Öffnung nach unten weisenden Stülpbehälter auf einen sog. befüllten Behälterstapel aufschieben oder von einem befüllten Behälterstapel abschieben. Andererseits kann die Handhabungseinrichtung von dem an der Stapelstelle angeordneten sog. puffernden Behälterstapel einen leeren Stülpbehälter entnehmen oder auf einen puffernden Behälterstapel übergeben und ablegen. Diese Entnahme und Abgabe kann ebenfalls mit einer Verschiebebewegung oder auch mit einer anderen Bewegung, z.B. einer Überhebebewegung, der Handhabungseinrichtung erfolgen.

Die Behälterstapelanordnung an der Stapelstelle kann kontinuierlich wechseln. Nach jedem Entnahme- oder Übergabevorgang eines leeren oder eines mit einer Warenlage befüllten Stülpbehälters kann ein Stapelwechsel an der Stapelstelle durchgeführt werden. Beim Stapelwechsel werden die bevorzugt zwei Behälterstapel getauscht. Die Zeiten für den Stapelwechsel und die Zeiten für das Hin- und Herbewegen eines Stülpbehälters zwischen der Stapelstelle und der Ladestelle können zeitsparend überschnitten werden.

Hierbei ist es günstig, wenn die Stapelstelle und die Ladestelle an gegenüberliegenden Seiten der Handhabungseinrichtung angeordnet sind. Die Stülpbehälter können dadurch in einer geraden Verschiebebewegung zwischen der Stapelstelle und der Ladestelle hin und her bewegt werden. Dies ist besonders günstig für das besagte Handhaben und Verschieben eines an der Unterseite offenen Stülpbehälters mitsamt einer darin aufgenommenen Warenlage von der Stapelstelle zur Ladestelle und/oder in Gegenrichtung. Die Stapelstelle und die Ladestelle schließen bevorzugt dicht an die Handhabungseinrichtung, an insbesondere deren Maschinengestell, an.

Die beanspruchte Stapeleinrichtung und das Stapelverfahren haben den Vorteil einer hohen Leistungsfähigkeit. Sie erlauben ein besonders schnelles und sukzessives Aufbauen und Abbauen eines befüllten Behälterstapels und eines puffernden Behälterstapels an der Stapelstelle und auf einem dortigen mobilen Stapelträger, z.B. einer Transportpalette. Ein solcher sukzessiver Aufbau und Abbau der Behälterstapel funktioniert schneller als das aus der WO 2015/128452 A1 bekannte Umstapeln von leeren und mit einer Warenlage befüllten Stülpbehältern an der Stapelstelle und innerhalb des dortigen Behälterstapels mit Stapelführung und Stapellifter.

Bei der vorbekannten Stapeltechnik muss die Handhabungseinrichtung sowohl die Behälter mit der aufgenommenen Warenlage verschieben, als auch das Umstapeln der Stülpbehälter vornehmen.

Die beanspruchte Stapeltechnik bietet mit dem zusätzlich zur Handhabungseinrichtung vorgesehenen und eigenständig beweglichen Stapeltransporter eine hohe Flexibilität bei einem moderaten Bauaufwand und einer hohen Leistungsfähigkeit. Die Bewegungen und Funktionen des Stapeltransporters beim Stapelwechsel können in Abstimmung mit den bidirektionalen Bewegungen der Handhabungseinrichtung mit dem jeweiligen Stülpbehälter zwischen der Stapelstelle und der Ladestelle abgestimmt werden.

Die Stapeltechnik ist bevorzugt auch dazu ausgebildet, an der Stapelstelle von dem puffernden Behälterstapel leere Stülpbehälter zu entnehmen und/oder an der Stapelstelle leere Stülpbehälter an den puffernden Behälterstapel zu übergeben.

Die Stapeltechnik kann dazu ausgebildet sein, die Warenlagen an der Ladestelle jeweils in einen leeren Stülpbehälter einzuladen und mit diesem Stülpbehälter an der Stapelstelle in einem sukzessive aufzubauenden befüllten Behälterstapel einzulagern. Die Stapeltechnik kann auch dazu ausgebildet sein, Warenlagen in Stülpbehältern aus einem an der Stapelstelle sukzessive abzubauenden befüllten Behälterstapel auszulagern und die jeweilige Warenlage dann an der Ladestelle aus dem Stülpbehälter auszuladen. Die Stapeltechnik kann dazu ausgebildet sein, entweder nur das Einlagern und Einladen von Warenlagen oder nur das Auslagern und Ausladen von Warenlagen als Einzelprozesse durchzuführen oder einen Kombiprozess mit Einlagern nebst Einladen und Auslagern nebst Ausladen durchzuführen.

Beim Einladen und Einlagern von Warenlagen im befüllten Behälterstapel können die hierfür benutzten leeren Stülpbehälter jeweils vom puffernden Behälterstapel entnommen und zum Einladen der jeweiligen Warenlage zur Ladestelle gebracht werden. Beim Einlagern der Warenlagen mitsamt den Stülpbehältern wird der befüllte Behälterstapel sukzessive aufgebaut und der puffernde Behälterstapel mit den leeren Stülpbehältern sukzessive abgebaut.

Umgekehrt werden beim Auslagern von Warenlagen die mit einer Warenlage befüllten Stülpbehälter zur Ladestelle verschoben und nach dem Ausladen der Warenlage leer zum puffernden Behälterstapel zurückbewegt. Hierbei wird der befüllte Behälterstapel sukzessive abgebaut und der puffernde Behälterstapel sukzessive aufgebaut.

Die Stapeleinrichtung kann dazu ausgebildet sein, befüllte und/oder puffernde Behälterstapel jeweils auf einem mobilen und auf dem Stapeltransporter befindlichen Stapelträger zu bilden. Die betreffenden Behälterstapel können an der Stapelstelle auf dem Stapelträger auf- und abgebaut werden. Unter den Begriff des Behälterstapels fallen einerseits der Stapelträger mit ein oder mehreren darauf aufgestapelten Stülpbehältern und andererseits in einem Anfangs- oder Endstadium der aufbauenden oder abbauenden Stapelbildung auch nur der Stapelträger.

Die Stapeltechnik ist dazu ausgebildet, im befüllten Behälterstapel die unterste Warenlage auf den mobilen Stapelträger und die nächsthöheren Warenlagen jeweils auf einen oben liegenden Behälterboden eines unteren Stülpbehälters zu stellen. Die Warenlagen sind dabei jeweils von einem darüber angeordneten oberen Stülpbehälter seitlich und an ihrer Oberseite umschlossen.

Die Stülpbehälter sind stapelbar ausgebildet. Sie haben die besagte kastenartige Form mit einer Seitenwandung, einem stirnseitigen Behälterboden und einer großen Behälteröffnung an der anderen Stirnseite. Die Behälteröffnung hat eine an das Warenlagenformat angepasste Größe und kann eine Warenlage seitlich umgreifen. Die Seitenwandung und der Behälterboden haben eine zumindest weitgehend, vorzugsweise vollständig, geschlossene Wandform. Die aufeinander gestapelten Stülpbehälter können durch eine Verrastung in ihrer gegenseitigen Lage gesichert werden.

Der Stülpbehälter wird von der Handhabungseinrichtung in umgedrehter Lage mit nach unten weisender Behälteröffnung gehandhabt. Der Stülpbehälter kann beim Einladen einer Warenlage in einer Relativbewegung von oben über die Warenlage gestülpt werden und kann diese in seinem inneren Hohlraum aufnehmen. Umgekehrt kann beim Auslagern der Stülpbehälter von der aufgenommenen Warenlage abgehoben und getrennt werden. Der Stülpbehälter und/oder die Warenlage können für diese Relativbewegung gehoben und gesenkt werden.

Alternativ kann das Einladen und Ausladen einer Warenlage in einen Stülpbehälter und aus einem Stülpbehälter in anderer Weise erfolgen, wobei der Stülpbehälter den Umständen entsprechend ausgebildet und mit beweglichen Wandteilen ausgestattet sein kann. Die Handhabungseinrichtung ist für die genannten Einlade- und Ausladevorgänge sowie das Einlagern und Auslagern einer Warenlage entsprechend ausgebildet.

Die Stapeltechnik kann derart ausgebildet und gesteuert sein, dass am Ende des Einlagerns der Warenlagen und bei Erreichen einer vorgegebenen Stapelhöhe der aufgebaute befüllte Behälterstapel von dem Stapeltransporter abgeführt wird. Ferner wird ein neuer puffernder Behälterstapel aus leeren Stülpbehältern dem Stapeltransporter zugeführt. Der neue puffernde Behälterstapel ersetzt den beim Einlagern zuvor abgebauten alten puffernden Behälterstapel.

Andererseits kann die Stapeltechnik derart ausgebildet und gesteuert sein, dass am Ende des Auslagerns der Warenlagen der aufgebaute puffernde Behälterstapel von dem Stapeltransporter abgeführt wird und ein neuer befüllter Behälterstapel dem Stapeltransporter zugeführt wird. Der neue befüllte Behälterstapel ersetzt den zuvor abgebauten alten befüllten Behälterstapel.

Die Stapeltechnik kann ferner derart ausgebildet und gesteuert sein, dass die Abfuhr eines befüllten Behälterstapels und die Zufuhr eines puffernden Behälterstapels von und zu dem Stapeltransporter zeitlich mit einer bidirektionalen Bewegung der Handhabungseinrichtung mit einem Stülpbehälter zwischen der Stapelstelle und der Ladestelle überschnitten wird. Umgekehrt kann auch die Zufuhr eines befüllten Behälterstapels und die Abfuhr eines puffernden Behälterstapels von und zu dem Stapeltransporter zeitlich mit der besagten bidirektionalen Bewegung der Handhabungseinrichtung überschnitten werden. Dies steigert die Leistungsfähigkeit der Stapeltechnik. Unterbrechungen und Pausen des Stapelprozesses können vermieden oder zumindest minimiert werden.

Hierfür kann am Ende des Einlagerns von Warenlagen der aufgebaute befüllte Behälterstapel von dem Stapeltransporter abgeführt und ein neuer puffernder Behälterstapel dem Stapeltransporter zugeführt werden, wobei während dieser Zeit die Handhabungseinrichtung den letzten leeren Stülpbehälter des abgebauten puffernden Behälterstapels handhabt und hierin an der Ladestelle eine Warenlage einlädt sowie zur Stapelstelle und zu dem dort inzwischen vom Stapeltransporter angeordneten mobilen Stapelträger des gerade abgebauten puffernden Behälterstapels verschiebt. Der Stapelträger des abgebauten puffernden Behälterstapels kann dadurch den Stapelträger des neuen aufzubauenden befüllten Behälterstapels bilden.

Umgekehrt kann am Ende des Auslagerns von Warenlagen der dabei aufgebaute puffernde Behälterstapel von dem Stapeltransporter abgeführt und ein neuer befüllter Behälterstapel zugeführt werden. Während dieser Zeit kann die Handhabungseinrichtung an der Ladestelle die Warenlage des letzten Stülpbehälters des befüllten Behälterstapels ausladen und dann den leeren Stülpbehälter zur Stapelstelle sowie zu dem dort inzwischen vom Stapeltransporter angeordneten mobilen Stapelträger des abgebauten befüllten Behälterstapels bewegen. Dieser mobile Stapelträger des gerade abgebauten befüllten Behälterstapels bildet dann die Basis des hierauf neu aufzubauenden puffernden Behälterstapels.

In beiden vorgenannten Fällen beim Ein- und Auslagern von Warenlagen kann der besagte mobile Stapelträger des gerade abgebauten Behälterstapels von und an dem Stapeltransporter auf die jeweils andere Stapelaufnahme umgesetzt werden. Dies kann während der Abfuhr und Zufuhr der Behälterstapel erfolgen. Das Umsetzen des mobilen Stapelträgers kann in Kombination mit der vorgenannten zeitlichen Überschneidung der bidirektionalen Bewegung der Handhabungseinrichtung oder ohne eine solche Überschneidung geschehen.

Das Umsetzen des mobilen Stapelträgers ist günstig, um den einen befüllten oder puffernden Behälterstapel an der einen Seite des Stapeltransporters abführen und an der anderen Seite des Stapeltransporters einen neuen puffernden oder befüllten Behälterstapel zuführen zu können. Diese Abfuhr und Zufuhr von Behälterstapeln von und zu dem Stapeltransporter kann zeitsparend in einer Art Umlaufbewegung erfolgen. Die Behälterstapel können dabei mittels Zuführförderern dem Stapeltransporter zugeführt und von diesem abgeführt werden. Die Zuführ- und Abführvorgänge können mit zeitlicher Überschneidung stattfinden. Alternativ sind andere Abläufe möglich.

Beim Ein- und Auslagern von Warenlagen kann der betreffende Behälterstapel vollständig mit Warenlagen befüllt oder vollständig von Warenlagen geleert werden. Alternativ sind eine Teilbefüllung oder Teilentleerung möglich. Dementsprechend kann der befüllte Trägerstapel nur teilweise aufgebaut oder abgebaut werden und hat dann eine entsprechend geringe Stapelhöhe. Eine Teilbefüllung und eine Teilentleerung können z.B. von einer an der Stapeleinrichtung angeschlossenen Fülllinie und deren Bedarf oder Kapazität abhängen.

Es ist vorteilhaft, auch bei einer Teilbefüllung oder Teilentleerung eine vorgegebene und gleich bleibende Stapelhöhe der Behälterstapel für deren Abfuhr zu haben. Hierzu können auf dem teilbefüllten oder teilentleerten Behälterstapel nach Beendigung des Ein- oder Auslagerns so viele leere Stülpbehälter aufgesetzt werden, bis eine vorgesehene Stapelhöhe ereicht ist. Diese leeren Stülpbehälter können vom benachbarten puffernden Behälterstapel entnommen werden. Der puffernde Behälterstapel wird dabei vollständig oder bis auf einen letzten, noch verbleibenden leeren Stülpbehälter abgebaut.

Eine trotz Teilbefüllung oder -entleerung gleich bleibende Stapelhöhe und eine entsprechende Stülpbehälterzahl im betreffenden Behälterstapel sind günstig für einheitliche Betriebsbedingungen der Stapeltechnik und der Speichereinrichtung. Insbesondere können an der Stapeleinrichtung stets alle vorhandenen Stülpbehälter zwischen den an der Stapelstelle gewechselten befüllten und gepufferten Behälterstapeln umgesetzt werden. Es bleiben keine Stülpbehälter übrig, die separat abgeführt oder zugeführt werden müssten.

Für den besagten Stapelwechsel ist es günstig, wenn der Stapeltransporter und die Stapelaufnahmen quer zu einer bevorzugt linearen Verschieberichtung der Handhabungseinrichtung und des gehandhabten Stülpbehälters beweglich sind. Die Verschieberichtung ist bevorzugt die Richtung einer geraden Direktverbindung zwischen Lade- und Stapelstelle.

Für die konstruktive und funktionale Ausbildung des Stapeltransporters gibt es verschiedene Möglichkeiten. In einer vorteilhaften Ausführung weist der Stapeltransporter einen Linearförderer mit den besagten Stapelaufnahmen auf. Besonders vorteilhaft ist eine Ausbildung des Linearförderers als Schlittenförderer. Er weist dazu einen Schlitten mit den zumindest zwei Stapelaufnahmen, eine bevorzugt lineare Schlittenführung und einen Schlittenantrieb auf. Dies ist besonders günstig, um die unterschiedlich schweren befüllten und puffernden Behälterstapel effizient bewegen und an der Stapelstelle anordnen, insbesondere positionieren, zu können.

Die Stapelaufnahmen können ein Führungsmittel, Zentriermittel oder dgl. zur exakten Positionierung des Stapelträgers und des Behälterstapels aufweisen. Der Stapelträger kann dabei lösbar auf die Stapelaufnahme aufgesetzt werden. Ein Linearförderer, insbesondere Schlittenförderer, kann besonders exakt gesteuert werden. Die Stapeleinrichtung kann eine Steuerung aufweisen, an welche die Handhabungseinrichtung und der Stapeltransporter sowie weitere Komponenten der Stapeleinrichtung, z.B. die Zuführförderer und eventuell ein Lagentisch an der Ladestelle oder dgl., angeschlossen sind.

Die Stapeleinrichtung kann an der Stapelstelle eine Hubeinrichtung aufweisen, die zum Abheben und Absenken eines mobilen Stapelträgers von und auf den Stapeltransporter sowie die Stapelaufnahme ausgebildet und vorgesehen ist. Der Stapeltransporter kann dabei unter dem angehobenen Stapelträger verfahren werden. Dies ermöglicht das besagte Umsetzen des mobilen Stapelträgers von einem gerade abgebauten Behälterstapel am Stapeltransporter, insbesondere das Umsetzen von einer Stapelaufnahme zur anderen Stapelaufnahme.

Der Stapeltransporter kann an die besagten Zuführförderer für eine Zufuhr und/oder Abfuhr von befüllten und puffernden Behälterstapeln angeschlossen sein. Der Stapeltransporter kann hierfür Übergabeförderer, insbesondere Querförderer, mit Hubmitteln an den Anschlussstellen der Zuführförderer aufweisen, die ein Abheben und Lösen des Behälterstapels vom Stapeltransporter erlauben.

Die Zuführförderer können an eine Transportvorrichtung einer Speichereinrichtung für Behälterstapel angebunden sein. Die befüllten und die puffernden Behälterstapel können in der Speichereinrichtung bevorratet und zwischengespeichert werden. Die Speichereinrichtung kann z.B. einen temporären Pufferspeicher für leere Flaschen zwischen einem Flaschenerzeuger, z.B. einer Blasmaschine einem Entpacker oder dgl., und einer Fülllinie bilden.

Die Stapeleinrichtung kann mindestens einen besagten mobilen Stapelträger aufweisen. Dieser besitzt eine Trägerdecke, einen Trägerboden und eine Transportaufnahme. Die Trägerdecke kann dazu ausgebildet sein, einen nach unten offenen Stülpbehälter und ggf. eine darin enthaltene Warenlage aufzunehmen. Der Stülpbehälter kann geführt aufgenommen und dadurch am mobilen Stapelträger in eine definierte Lage gebracht und in dieser gehalten werden. Die Führung kann z.B. als mechanische und formschlüssige Verrastung ausgebildet sein. Eine solche Verrastung kann auch zwischen der Seitenwandung und den Behälterböden der jeweiligen Stülpbehälter ausgebildet sein.

Der Trägerboden des Stapelträgers kann dazu ausgebildet sein, eine definierte Standfläche für den Stapelträger zu bilden, insbesondere gegenüber einer Stapelaufnahme am Stapeltransporter. Der Trägerboden kann außerdem an die Oberseite bzw. den oberen Behälterboden eines Stülpbehälters adaptiert sein, wobei jeweils eine Führungsfunktion ausgebildet wird. Die Adaption an eine Oberseite bzw. an den Behälterboden eines im Behälterstapel umgedrehten und mit der besagten Behälteröffnung nach unten weisenden Stülpbehälters ermöglicht ein Aufeinanderstapeln von mehreren kleineren und einzelnen Behälterstapeln. Zwischen den jeweiligen Behälterstapeln befindet sich dabei ein mobiler Stapelträger. Das Aufbauen und Abbauen solcher mehrteiliger Behälterstapel kann durch die besagte Transporteinrichtung durchgeführt werden. Eine Transportaufnahme am Stapelträger kann einen definierten Eingriff mit einem Transportlader, z.B. einer Ladegabel, einer Transportvorrichtung zu ermöglichen. Eine Transportaufnahme kann z.B. als definierte Einführöffnung mit Stützmitteln an einer Seitenwandung des mobilen Stapelträgers ausgebildet sein. Alternativ sind andere Ausgestaltungen der Transportaufnahme, z.B. in Form von Vorsprüngen, Kupplungsmitteln oder dergleichen möglich.

An der Ladestelle der Stapeleinrichtung kann in einer vorteilhaften Ausführung ein Lagentisch angeordnet sein. Dieser Lagentisch kann Teil einer Lagenbildungsvorrichtung oder einer Reihenbildungsvorrichtung oder einer kombinierten Lagen- und Reihenbildungsvorrichtung sein.

Die Handhabungseinrichtung kann ebenfalls in unterschiedlicher Weise konstruktiv und funktional ausgebildet sein. Die Handhabungseinrichtung kann ein mehrachsig bewegliches Handlinggerät für die leeren oder die mit einer Warenlage befüllten Stülpbehälter aufweisen. Das Handlingsgerät ist dabei zur Handhabung der an der Unterseite offenen Stülpbehältern in dieser Stülplage ausgebildet.

Die Handhabungseinrichtung kann ferner einen Tragboden umfassen, auf dem die in einem Stülpbehälter aufgenommene Warenlage von der Stapelstelle zur Ladestelle und in Gegenrichtung verschoben werden kann. Auf dem Tragboden können auch leere Stülpbehälter verschoben werden. Der Tragboden überbrückt den horizontalen Abstand zwischen Stapel- und Ladestelle.

Der Tragboden kann mit dem Handlinggerät mitbewegt werden. Dies kann eine Höhenbewegung und ggf. eine seitliche Bewegung sein, mit welcher der Tragboden dicht an die Stapelstelle und/oder die Ladestelle anschließt. Dies ist vorteilhaft für ein ungehindertes Überschieben einer Warenlage und/oder eines Stülpbehälters vom Tragboden zur Ladestelle und auf oder von einem dortigen Stapelträger oder Behälterboden eines Stülpbehälters. An der Ladestelle wird das besagte Überschieben auf oder von einem an der Ladestelle z.B. angeordneten Lagentisch erleichert.

Durch eine Höhenverstellung des Handlinggeräts und des Tragbodens, insbesondere an einem Maschinengestell, ist eine Anpassung an die beim Stapelprozess sich ändernden Stapelhöhen des befüllten und des puffernden Behälterstapels möglich. Die Ladestelle kann eine feste Höhenlage haben. Sie kann z.B. nur einen Ladetisch aufweisen. Alternativ können an der Ladestelle mehrere Ladetische oder andere geeignete Einheiten zur Aufnahme einer Warenlage übereinander angeordnet sein.

Die Handhabungseinrichtung kann eine oder mehrere, ein- oder mehrachsige Verstelleinrichtungen für das Handlinggerät und/oder den Tragboden aufweisen. Für eine Ausbalancierung von Höhenbewegungen kann ein Gegengewicht vorgesehen sein. Dieses entlastet die ein oder mehreren Antriebe der Verstelleinrichtung und erleichtert eine exakte Höhen-Positionierung.

Das Handlinggerät kann ein Handlingwerkzeug zum lösbaren Halten eines Stülpbehälters aufweisen, welches z.B. von der Verstelleinrichtung mehrachsig bewegt und geführt werden kann. Die Verstelleinrichtung kann z.B. von einem schwenkbaren oder teleskopierbaren Ausleger mit einer Führungsfunktion für das Handlingwerkzeug beim Verschieben eines Stülpbehälters und von einem Schlitten zur Höhenverstellung beim Ein- und Ausladen sowie zur Anpassung an die veränderliche Stapelhöhe gebildet werden. In einer anderen Ausführung kann das Handlinggerät als mehrachsiger Industrieroboter, z.B. Gelenkarmroboter, ausgebildet sein. Der Tragboden kann eine eigene Verstelleinrichtung aufweisen.

Das Handlingwerkzeug kann als Greifeinrichtung ausgebildet sein. Es kann z.B. einen oder mehrere bevorzugt adhesive Greifer und/oder mechanische Greifer sowie eine Positioniereinrichtung für einen Stülpbehälter umfassen. Ein adhesiver Greifer kann z.B. als Sauggreifer, Magnetgreifer oder dgl. ausgebildet sein und kann von oben am Behälterboden angreifen. Ein mechanischer Greifer kann eine Formschluss- und Riegelfunktion haben. Diese kann auch bei Ausfall eines adhesiven Greifers wirken und kann eine Verliersicherung für den gegriffenen Stülpbehälter bilden.

Die Erfindung betrifft auch eine Behandlungsanlage für Waren, insbesondere leere oder gefüllte Flaschen, wobei die Behandlungsanlage eine Stapeleinrichtung für die Waren in Form von Warenlagen umfasst. Die Stapeleinrichtung ist in der beanspruchten Art ausgebildet.

Die Behandlungsanlage kann ferner eine mit einer Ladestelle der Stapeleinrichtung verbundene Lagen- und/oder Reihenbildungsvorrichtung aufweisen. Die Lagenbildungsvorrichtung bildet aus ein oder mehreren zugeführten Warenreihen eine Warenlage bildet und stellt diese an der besagten Ladestelle, insbesondere auf einem Lagentisch, bereit. Die Reihenbildungsvorrichtung kann die an der Ladestelle bereit gestellte Warenlage vereinzeln und ein oder mehrere Warenreihen bilde, die dann mit entsprechender Fördertechnik abtransportiert werden können.

Die Behandlungsanlage kann eine der Stapeleinrichtung vorgeschaltete Warenanlieferung und eine der Stapeleinrichtung nachgeschaltete Warenbehandlungseinrichtung umfassen. Eine Warenanlieferung kann z.B. als Entpacker oder als Warenerzeuger, insbesondere Flaschenerzeuger, ausgestaltet sein. Eine Warenbehandlungseinrichtung kann z.B. als Füllanlage ausgebildet sein. Die Warenanlieferung und die Warenbehandlungseinrichtung können an die besagten Ladestellen angeschlossen sein.

In den Unteransprüchen sind weitere vorteilhafte Ausgestaltungen der Erfindung angegeben.

Die beanspruchte Stapeleinrichtung und die beanspruchte Behandlungsanlage sowie das beanspruchte Stapelverfahren können folgende weiteren Ausgestaltungen haben, die einzeln oder in Kombination benutzbar sind

Die Stapeleinrichtung, insbesondere die Handhabungseinrichtung, kann dazu ausgebildet sein, beim Einlagern von Warenlagen die leeren Stülpbehälter an der Stapelstelle von dem puffernden Behälterstapel zu entnehmen, wobei der befüllte Behälterstapel sukzessive aufgebaut und der puffernde Behälterstapel sukzessive abgebaut wird.

Die Stapeleinrichtung, insbesondere die Handhabungseinrichtung, kann dazu ausgebildet sein, beim beim Auslagern von Warenlagen die geleerten Stülpbehälter an der Stapelstelle (9) an den puffernden Behälterstapel zu übergeben, wobei der befüllte Behälterstapel sukzessive abgebaut und der puffernde Behälterstapel sukzessive aufgebaut wird.

Die Stapeleinrichtung kann dazu ausgebildet sein, befüllte und/oder puffernde Behälterstapel jeweils auf einem mobilen und auf dem Stapeltransporter befindlichen Stapelträger zu bilden.

Die Handhabungseinrichtung kann dazu ausgebildet sein, einen nach unten offenen Stülpbehälter an der Ladestelle von einer aufgenommenen und mitgeführten Warenlage zum Ausladen abzuheben und/oder einen leeren Stülpbehälter an der Ladestelle über eine bereit gestellte Warenlage zum Einladen abzusenken.

Die Handhabungseinrichtung kann dazu ausgebildet sein, einen nach unten offenen Stülpbehälter mit einer darin aufgenommenen Warenlage auf einem mitgeführten Tragboden von der Ladestelle zur Stapelstelle und umgekehrt von der Stapelstelle zur Ladestelle zu verschieben. Dies erfolgt in einer Verschieberichtung.

Die Handhabungseinrichtung kann dazu ausgebildet sein, einen nach unten offenen Stülpbehälter mit einer darin aufgenommenen Warenlage an der Ladestelle von einem mitgeführten Tragboden auf einen Lagentisch zu verschieben oder umgekehrt von einem Lagentisch auf einen mitgeführten Tragboden zu verschieben. Dies erfolgt ebenfalls in der Verschieberichtung.

An der Ladestelle der Stapeleinrichtung kann ein Lagentisch einer Lagenbildungsvorrichtung und/oder ein Lagentisch einer Reihenbildungsvorrichtung angeordnet sein. Der Lagentisch kann an der Ladestelle ortsfest angeordnet oder beweglich, insbesondere als Teil eines Lagenförderers, ausgebildet sein.

Die Handhabungseinrichtung kann dazu ausgebildet sein, einen nach unten offenen Stülpbehälter mit einer darin aufgenommenen Warenlage an der Stapelstelle von einem mitgeführten Tragboden auf einen oben liegenden Behälterboden eines obersten Stülpbehälters im befüllten Behälterstapel zu verschieben. Die Handhabungseinrichtung kann umgekehrt dazu ausgebildet sein, an der Stapelstelle vom befüllten Behälterstapel einen obersten nach unten offenen Stülpbehälter mit einer darin aufgenommenen Warenlage auf einen mitgeführten Tragboden zu verschieben.

Der Stapeltransporter der Stapeleinrichtung kann einen Linearförderer mit den Stapelaufnahmen aufweisen. Der Linearförderer kann einen Schlitten mit den Stapelaufnahmen, eine Schlittenführung und einen Schlittenantrieb aufweisen.

Die Handhabungseinrichtung kann ein Handlinggerät und einen mitbewegbaren, bevorzugt horizontalen, Tragboden aufweisen. Das Handlinggerät und der Tragboden können in der Höhe und ggf. seitlich beweglich angeordnet sein. Das Handlinggerät kann in einer Richtung zwischen der Stapelstelle und der Ladestelle reversierend beweglich sein. Die Handhabungseinrichtung kann zumindest eine Verstelleinrichtung und ggf. ein Gegengewicht für eine Höhenverstellung des Handlinggeräts und des Tragbodens aufweisen.

Ein Handlinggerät der Handhabungseinrichtung kann ein Handlingwerkzeug zum lösbaren Halten eines nach unten offenen Stülpbehälters aufweisen. Das Handlingwerkzeug kann als Greifeinrichtung ausgebildet sein. Es kann ein oder mehrere, bevorzugt fluidische und mechanische, Greifer sowie eine Positioniereinrichtung für einen Stülpbehälter umfassen kann.

Der Stapeltransporter und die Stapelaufnahmen der Stapeleinrichtung können quer zu einer bevorzugt linearen Verschieberichtung der Handhabungseinrichtung beim Verschieben der Stülpbehälter beweglich sein.

Der Stapeltransporter kann einen Übergabeförderer, insbesondere einen Querförderer, mit Hubmitteln an den Anschlussstellen von Zuführförderern der Stapeleinrichtung aufweisen.

Die Zuführförderer der Stapeleinrichtung können an eine Transportvorrichtung einer Speichereinrichtung für Behälterstapel angebunden sein.

Die Stapeleinrichtung kann eine Steuerung für Ihre Komponenten, insbesondere dien Stapeltransporter und die Handhabungseinrichtung, aufweisen.

Die für die beanspruchte Stapeleinrichtung und die beanspruchte Behandlungsanlage angegebenen Merkmale können auch Merkmale des beanspruchten Stapelverfahrens sowie des Behandlungsverfahrens und umgekehrt sein.

Die Erfindung ist in den Zeichnungen beispielhaft und schematisch dargestellt. Im Einzelnen zeigen:
- Figur 1 bis 4:: einen Ablauf beim Greifen und Stapeln einer Warenlage mit Stülpbehältern in verschiedenen Teilschritten,
- Figur 5:: eine Draufsicht auf eine Behandlungsanlage mit zwei Stapeleinrichtungen und einer Speichereinrichtung
- Figur 6 und 7:: eine Stapeleinrichtung von Figur 5 in verschiedenen perspektivischen Ansichten,
- Figur 8 und 9:: eine Stirnansicht und eine Draufsicht der Stapeleinrichtung von Figur 5,
- Figur 10:: eine abgebrochene Draufsicht auf einen Stapeltransporter der Stapeleinrichtung von Figur 5,
- Figur 11:: einen Längsschnitt durch eine Stapeleinrichtung von Figur 5,

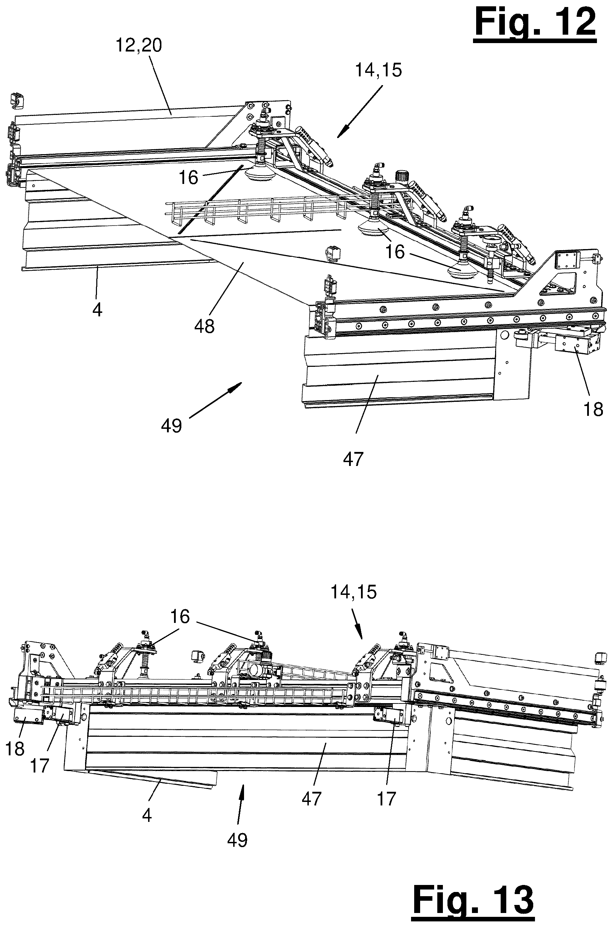

- Figur 12 und 13:: ein Handlingwerkzeug einer Stapeleinrichtung von Figur 5 in verschiedenen geschnittenen Ansichten,
- Figur 14:: einen Behälterstapel aus einem Stapelträger und mehreren Stülpbehältern und
- Figur 15:: eine Ladestelle der Stapeleinrichtung von Figur 5 mit einer Lagen- und/oder Reihenbildungsvorrichtung.

Die Erfindung betrifft eine Stapeleinrichtung (8) und ein Stapelverfahren für Warenlagen (3). Sie betrifft ferner eine Behandlungsanlage (1).

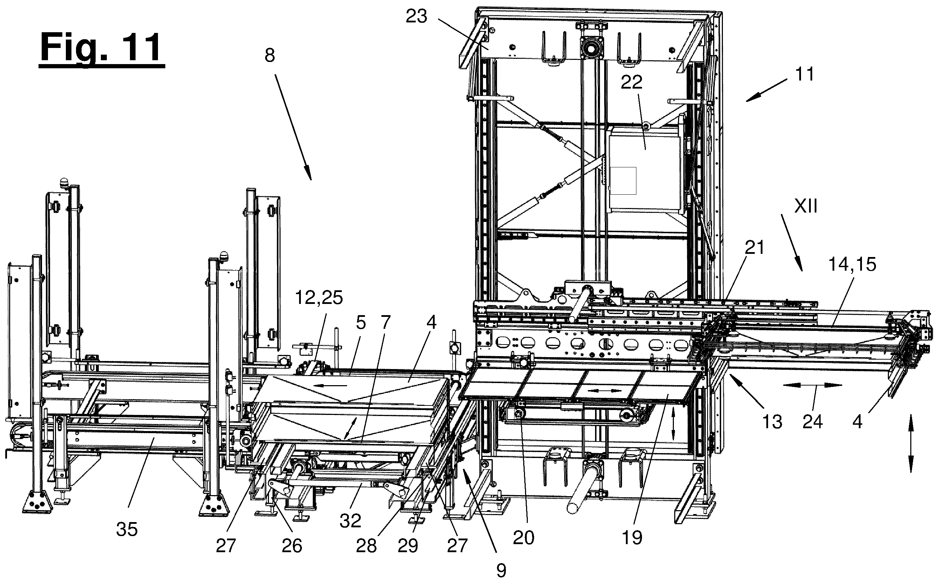

Die Warenlage (3) kann von einer oder mehreren Waren (2) gebildet werden. Die Waren (2) können in einer flächigen oder matrixähnlichen Anordnung nebeneinander und gegebenenfalls auch übereinander angeordnet sein. Die Waren (2) bestehen in den gezeigten und bevorzugten Ausführungsbeispielen aus leeren oder gefüllten Flaschen oder anderen Behältern. Alternativ sind andere Warenformen, z.B. Pakete oder dergleichen möglich. In den gezeigten Ausführungsbeispielen kommen leere und leichtgewichtige Flaschen aus Kunststoff zum Einsatz. Sie können eine rotationssymmetrische oder unregelmäßige Grundflächenform haben. Solche Flaschen können im Stand eine labile Lage haben. Figur 11 verdeutlicht diese Ausbildung.

In den gezeigten Ausführungsbeispielen stehen die Waren (2) innerhalb der Warenlage (3) nebeneinander. Sie können dabei in einer regelmäßigen Matrix stehen, die von mehreren nebeneinander angeordneten und gleich ausgerichteten Warenreihen gebildet wird. Figur 11 zeigt eine solche Warenlage (3). In einer anderen Ausführungsform sind auch ein Reihenversatz und eine Vernestung der einzelnen Waren (2) in benachbarten Reihen möglich.

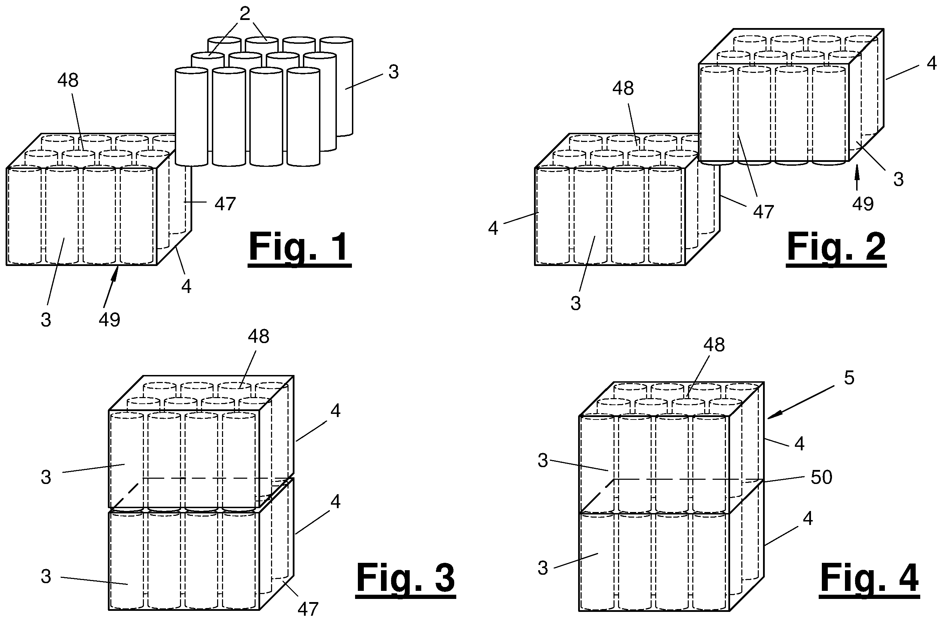

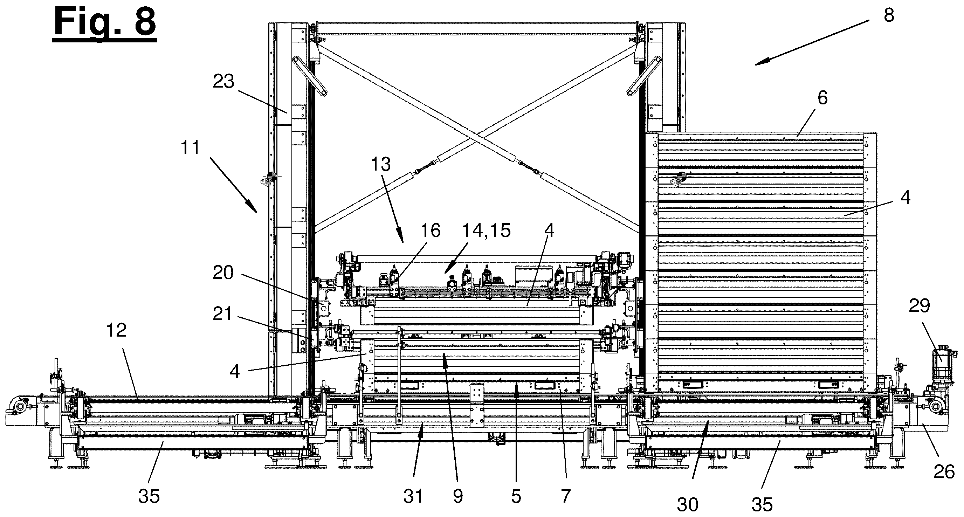

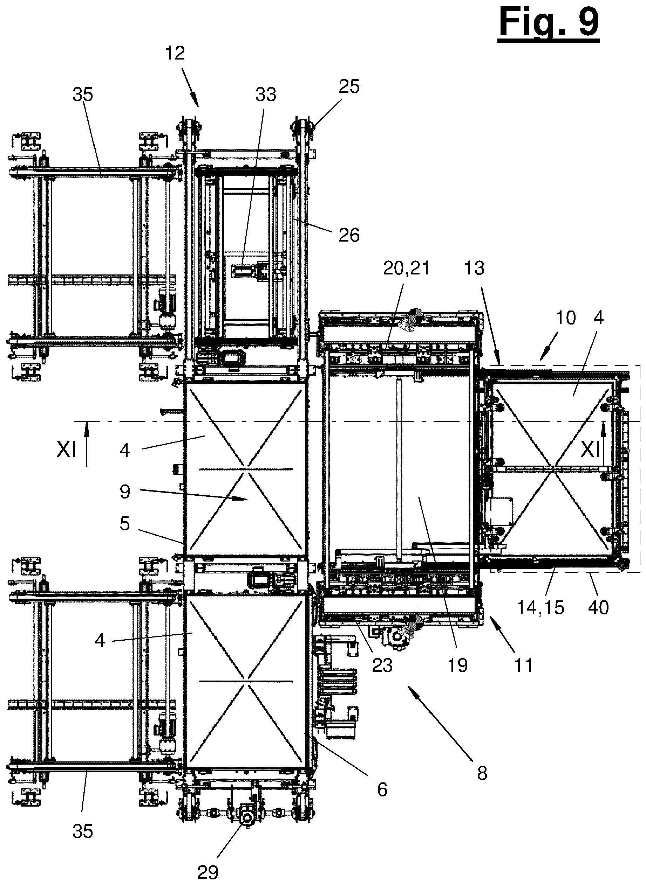

Figur 1 bis 4 verdeutlichen einen Stapelbildungsvorgang in mehreren Schritten. Das Stapeln von Warenlagen (3) erfolgt mittels Stülpbehältern (4), die eine seitliche Behälterwandung (47), eine nach unten gerichtete, stirnseitige Behälteröffnung (49) und einen nach oben gerichteten Behälterboden (48) an der anderen, gegenüberliegenden Stirnseite aufweisen. Die Behälteröffnung (49) ist großflächig und hat eine an das Lagenformat und den Umriss einer Warenlage (3) angepasste Größe. Die Stülpbehälter (4) können die Form von umgedrehten Kästen oder Trays haben. Sie können mit ihrer unteren Behälteröffnung (49) über eine Warenlage (3) gestülpt werden. Hierdurch nehmen sie die Warenlage (3) in ihrem hohlen Innenraum auf, wobei die Warenlage (3) anderweitig von unten her abgestützt ist. Figur 8 bis 11 zeigen diese Ausbildung und Anordnung.

Der Stülpbehälter (4) kann z.B. eine kubische Form haben und ein beliebiges Format besitzen, z.B. entsprechend einer Euro-Palette. Er kann aus einem beliebigen Material, insbesondere Kunststoff, Metall oder Holz oder auch aus Verbundmaterialien bestehen. Das Format des Behälterinnenraums ist vorzugsweise an das Warenlagenformat in Größe und Form angepasst und ist geringfügig größer.

Die seitliche Behälterwandung (47) umgibt in der Stülpstellung die Warenlage (3) an ihren Seiten. Sie umschließt sie dabei bevorzugt an allen Seiten und bietet dadurch eine Seitenführung für die Warenlage (3). In den gezeigten Ausführungsbeispielen sind die z.B. vier Seitenwände der Behälterwandung (47) starr miteinander und bevorzugt auch mit dem Behälterboden (48) verbunden. Sie bilden dabei eine Art Rahmen für die Warenlage (3). In den gezeigten Ausführungsbeispielen haben die Wände der seitlichen Behälterwandung (47) eine profilierte Querschnittsform und sind massiv ausgebildet. In einer anderen Variante können sie Unterbrechungen, z.B. eine Lochung, ein Gitter oder dergleichen, aufweisen. Sie können auch von einzelnen, beabstandeten Streben, z.B. in Verbindung mit Eckpfosten, gebildet werden. Daneben sind andere geeignete Wandgestaltungen möglich. In den gezeigten Ausführungsbeispielen ist die Behälterwandung (47) starr ausgebildet und kann sich nicht oder nur unwesentlich verformen. In einer anderen Ausführung kann sie eine größere Flexibilität haben.

Die Höhe der seitlichen Behälterwandung (47) ist vorzugsweise mindestens gleich oder größer als die Höhe der Warenlage (3). Die Stülpbehälter (4) können dadurch eine Warenlage (3) vollständig in ihrem von der seitlichen Behälterwandung (47) und dem Behälterboden (48) umschlossenen Behälterinnenraum aufnehmen.

Der Behälterboden (48) hat eine Mehrfachfunktion. Er deckt einerseits die im Behälterinnenraum aufgenommene Warenlage (3) nach oben ab. Andererseits bildet der Behälterboden (48) mit seiner Außenseite eine Standfläche für die nächsthöhere Warenlage (3) im nächsthöheren Stülpbehälter (4). Die Oberseite des Behälterbodens (48) und die hiervon gebildete Standfläche können im Wesentlichen eben ausgebildet sein.

Der Behälterboden (48) weist vorzugsweise eine geschlossene und stabile Wandung auf. Er kann alternativ Durchbrechungen haben, wobei er zumindest als Gitterboden oder Lochboden ausgebildet ist. Die im Wesentlichen ebene Flächenform ermöglicht ein Verschieben der Warenlage (3) und ihrer Waren (2) auf der Außenseite des Behälterbodens (48) und entlang der Standfläche.

Figur 1 zeigt eine erste untere Warenlage (3) in einem Stülpbehälter (4) und eine mit geringem Abstand darüber angeordnete und bereit gestellte zweite Warenlage (3). Gemäß Figur 2 wird über diese zweite Warenlage (3) der Stülpbehälter (4) gesetzt, insbesondere von oben übergestülpt. Der lose Stülpbehälter (4) wird dabei in einer Schwebeposition gehalten, wobei der untere öffnungsseitige Rand seiner seitlichen Behälterwandung (47) oberhalb der Unterseite der Warenlage (3) endet. In dieser Stellung kann gemäß Figur 2 und 3 der obere Stülpbehälter (4) dann seitlich, insbesondere horizontal verschoben werden, wobei er z.B. die Warenlage (3) mitnimmt und sie dabei über den unteren Stülpbehälter (4) schiebt und auf dessen Trägerboden (48) abstellt. Bei der Verschiebebewegung wird die obere Warenlage (3) von unten her mit einem nicht dargestellten Tragboden (19) abgestützt, auf dem die Warenlage (3) bei einem seitlichen Verschieben gleiten oder rutschen kann. Andererseits ist es möglich, dass auf dem Tragboden (19) ein leerer Stülpbehälter (4) angeordnet ist und die besagte Warenlage (3) bei ihrer Verschiebebewegung auf der Außenseite von dessen Behälterboden (43) abgestützt wird.

In einer anderen und nicht dargestellten Ausführung kann die Handhabungseinrichtung (11) einen Lagenhalter umfassen, der eine Haltefunktion und ggf. Verschiebefunktion für die Warenlage (3) hat. Der Lagenhalter kann z.B. dem Handlinggerät (13) zugeordnet sein. Der Lagenhalter kann alternativ einer Ladestelle (10) zugeordnet sein. Der Lagenhalter kann eine zumindest bereichsweise vom Stülpbehälter (4) getrennte Warenlage (3) halten und ausrichten. Der Stülpbehälter (4) kann hierfür **z.B.** ein Stück von der Warenlage (3) abgehoben werden, sodass der Lagenhalter eine seitliche Zugangsmöglichkeit zu der Warenlage (3) hat und diese greifen, halten und ausrichten kann. Der Lagenhalter kann die Warenlage (3) ggf. auch mittels eines ggf. eigenen Antriebs verschieben, wobei der schwebend gehaltene Stülpbehälter (4) synchron mitbewegt wird.

Am Ende des seitlichen Schiebevorgangs gemäß Figur 3 schwebt der obere Stülpbehälter noch mit einem Abstand über dem unteren Stülpbehälter (4). Bei letzten Schritt gemäß Figur 4 wird der obere Stülpbehälter (4) abgesenkt und auf den unteren Stülpbehälter (4) abgesetzt. Hierbei kommt die seitliche Behälterwandung (47) mit dem Behälterboden (48) des unteren Stülpbehälters (4) in Kontakt und stützt sich hierauf ab. In dieser Stellung wird der Innen- oder Aufnahmeraum mit der aufgenommenen Warenlage (3) an allen Seiten umlaufend geschlossen.

Um die gegenseitige Lage der aufeinander gestapelten Stülpbehälter (4) im Behälterstapel (5) zu sichern, kann eine gegenseitige und bevorzugt formschlüssige Führung der Stülpbehälter (4) im Kontaktbereich vorhanden sein. Diese Führung kann z.B. als eine gegenseitige formschlüssige Verrastung (50) ausgebildet sein. Die Verrastung (50) kann in beliebig geeigneter Weise ausgebildet sein. In einer Variante hat der Behälterboden (48) an seiner Außenseite eine oder mehrere lokale oder ggf. umlaufende stufenartige Vertiefungen, die den öffnungsseitigen Rand der seitlichen Behälterwandung (47) des oberen Stülpbehälters (4) formschlüssig aufnehmen, zentrieren und seitlich gegen Verrutschen sichern. In einer anderen Variante können die Ränder der seitlichen Behälterwandung (47) ebenfalls eine stufenförmige Ausbildung haben. Daneben sind beliebige andere Varianten, insbesondere auch ineinander greifende Zapfen bzw. Rippen und entsprechende Aufnahmeöffnungen möglich.

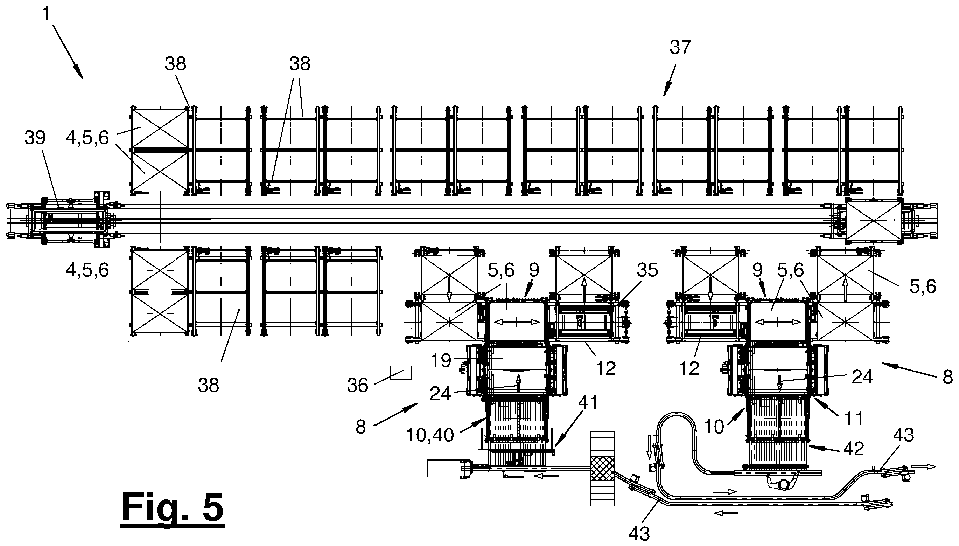

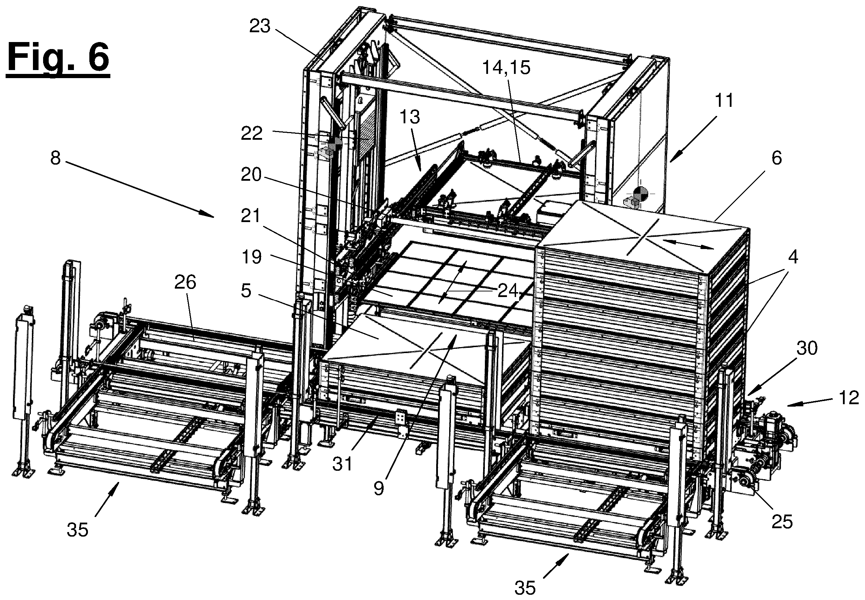

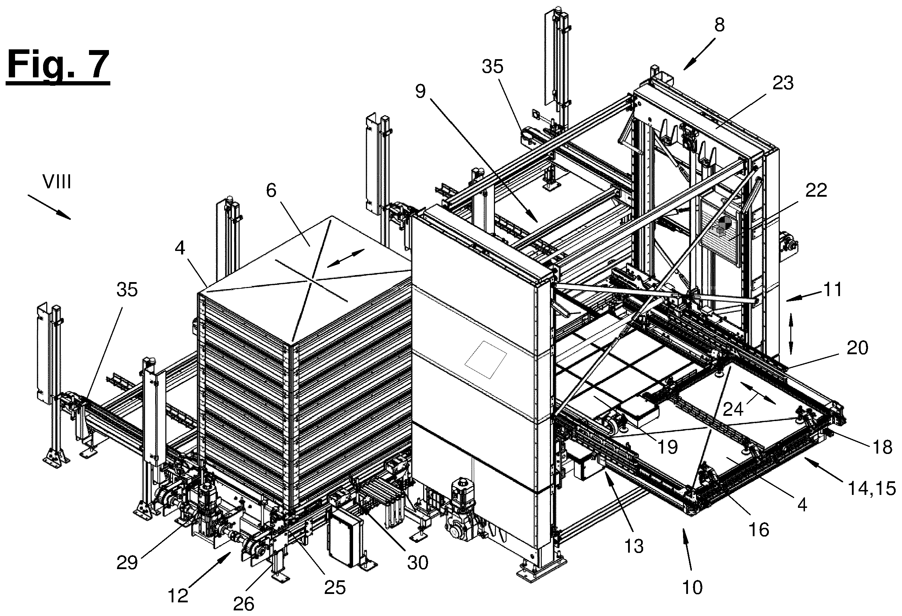

Figur 5 bis 11 verdeutlichen eine Stapeleinrichtung (8), eine Speichereinrichtung (37) und eine Behandlungsanlage (1) sowie ein Stapelverfahren.

Figur 5 zeigt in einer schematischen Draufsicht eine Behandlungsanlage (1) für die Waren (2), wobei die Behandlungsanlage (1) zwei Stapeleinrichtungen (8) und eine Speichereinrichtung (37) umfasst, welche mit den Stapeleinrichtungen (8) über eine Transportvorrichtung (39) verbunden ist.

Die Stapeleinrichtungen (8) umfassen in den gezeigten Ausführungsformen jeweils eine Handlingeinrichtung (11), die zwischen einer stationären Ladestelle (10) für die Zufuhr und/oder Abfuhr von Warenlagen (3) und einer stationären Stapelstelle (9) für die Anordnung eines aufzubauenden oder abzubauenden Behälterstapels (5,6) angeordnet ist.

Die Stapeleinrichtung (8) umfasst ferner einen gesteuert beweglichen Stapeltransporter (12), der im Bereich der Stapelstelle (9) angeordnet ist und der an der Stapelstelle (9) abwechselnd einen befüllten Behälterstapel (5) aus Stülpbehältern (4) mit darin jeweils aufgenommenen Warenlagen (3) und einen puffernden Behälterstapel (6) aus leeren Stülpbehältern (4) anordnet, insbesondere positioniert. Die Stapelstelle (9) und die Ladestelle (10) sind z.B. an gegenüberliegenden Seiten der Handhabungseinrichtung (11) und ihres Maschinengestells (23) angeordnet. Alternativ ist eine andere Anordnung, z.B. über Eck, möglich.

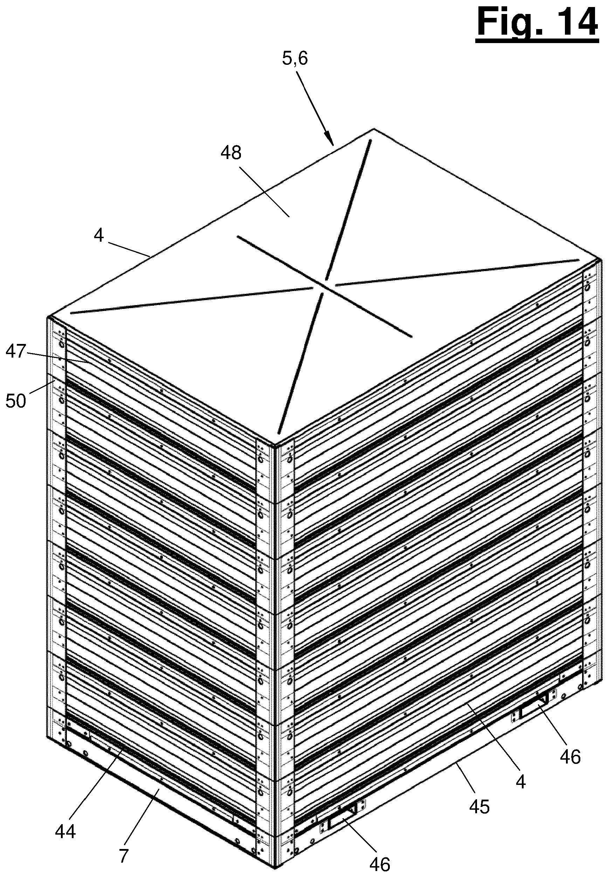

Die Behälterstapel (5,6) umfassen jeweils einen mobilen Stapelträger (7) und darauf aufgestapelte ein oder mehrere der vorbeschriebenen Stülpbehälter (4). Figur 14 zeigt diese Ausbildung und Anordnung.

Der Stapelträger (7) bildet den Boden des darauf aufzurichtenden Behälterstapels (5,6) und bildet auch die Stützfläche für die unterste Warenlage (3) im Behälterstapel (5,6). Der mobile Stapelträger (7) weist an der Oberseite eine Trägerdecke (44), an der Unterseite ggf. einen Trägerboden (45) und außerdem eine Transportaufnahme (46) auf. Letztere ist z.B. auf die Transportvorrichtung (39) abgestimmt. Die Trägerdecke (44) nimmt eine Warenlage (3) und den untersten Stülpbehälter (4) auf. Der an der Unterseite offene Stülpbehälter (4) wird dabei geführt aufgenommen, z.B. durch eine Verrastung (50).

Der Trägerboden (45) kann eine Mehrfachfunktion haben und kann eine definierte Standfläche für den Stapelträger (7) sowie den darauf aufgerichteten Behälterstapel (5,6) am Untergrund bzw. Hallenboden und ggf. auch auf dem oberen Stülpbehälter (4) eines unteren Behälterstapels (5,6). Letzteres erlaubt das Aufeinanderschichten von mehreren Behälterstapeln (5,6). In diesen Fällen kann z.B. eine formschlüssige Führungsfunktion vorhanden sein.

Die Handhabungseinrichtung (11) umfasst ein bevorzugt turmartiges Maschinengestell (23), ein bewegliches Handlinggerät (13) mit einem Handlingwerkzeug (14) sowie einen ebenfalls beweglichen Tragboden (9). Das Handlinggerät (13) ist mehrachsig beweglich und ist zur Handhabung der Stülpbehälter (4) in der gezeigten Stülplage der Stülpträger (4) mit der nach unten weisenden Behälteröffnung (49) ausgebildet. Der Tragboden (19) kann mit dem Handlinggerät (13) synchron oder asynchron mitbewegt werden. Das Handlinggerät (13) und der Tragboden (19) sind bevorzugt vertikal und in der Höhe beweglich sowie horizontal beweglich am Maschinengestell (23) gelagert. Die Handhabungseinrichtung (11) umfasst auch eine oder mehrere Verstelleinrichtungen (20,21) für die besagte Höhen- und/oder Seitenverstellung des Handlinggeräts (13) und des Tragbodens (19). Vorzugsweise sind für das Handlinggerät (13) und für den Tragboden (19) jeweils eine eigene Verstelleinrichtung (20,21) vorhanden. Die ein oder mehreren Verstelleinrichtungen (20,21) weisen entsprechend der Achsenzahl angeordnete und ausgebildete sowie steuerbare Antriebe auf. Das Eigengewicht des Handlinggeräts (13) und/oder des Tragbodens (19) kann durch ein verstellbares Gegengewicht (22) im Maschinengestell (23) kompensiert werden.

Das Handlinggerät (13) ist zum lösbaren Halten und Handhaben eines Stülpbehälters (4) ausgebildet. In den gezeigten Ausführungsbeispielen ist das Handlingwerkzeug (14) als Greifeinrichtung (15) ausgebildet und weist ein oder mehrere Greifer (16,17) sowie eine Positioniereinrichtung (18) für einen in Stülplage gegriffenen Stülpbehälter (4) auf. In der gezeigten Ausführungsform kommen adhäsive Greifer (16) und mechanische Greifer (17) zum Einsatz. Die adhäsiven Greifer (16) sind z.B. als Sauggreifer ausgebildet und wirken mit daneben angeordneten und positionierten Anschlägen für die Definition der Höhenlage der am Behälterboden (48) gegriffenen Stülpbehälter (4) zusammen. Die adhäsiven Greifer (16) greifen an der Oberseite des Behälterbodens (48) an. Die mechanischen Greifer (16) sind z.B. mit ausfahrbaren Pins ausgestattet, die in entsprechende Aufnahmeöffnungen an einer Seitenwand (47) des gegriffenen Stülpbehälters (4) formschlüssig eingreifen. Die Positioniereinrichtung (18) kann an diagonal einander gegenüberliegenden Eckbereichen des bevorzugt quaderförmigen Stülpbehälters (4) angreifen. Die Positioniereinrichtungen (18) weisen z.B. ein an den Eckbereichen angepasstes und mit einer V-Öffnung versehenes Positionierstück auf, das von einem gesteuerten Positionierantrieb (18) an die Behälterecke zugestellt und weggestellt wird. Die Greifer (16,17) und die Positioniereinrichtung (18) können mit der Steuerung (36) verbunden sein. Die Greifeinrichtung (15) weist außerdem einen z.B. rechteckförmigen Tragrahmen auf, der mit der Verstelleinrichtung (20) verbunden ist und an dem die Greifer (16,17) und die Positioniereinrichtung (18) angeordnet sind. Alternativ kann das Handlingwerkzeug (14) in anderer Weise ausgebildet sein.

Die Verstelleinrichtung (20) umfasst in den gezeigten Ausführungsbeispielen einen für die Höhenverstellung vertikal im Maschinengestell (23) verstellbar geführten und angetriebenen Schlitten sowie einen daran horizontal beweglich und verstellbar geführten Ausleger, an dessen Ende das Handlingwerkzeug (14) montiert ist. Durch eine horizontale Verschiebebewegung des Auslegers in Verschieberichtung (24) kann das Handlingwerkzeug (14) über dem unterhalb angeordneten Tragboden (19) bis über die Stapelstelle (9) und über die Ladestelle (10) verschoben werden. Hierbei kann auch ein gegriffener, nach unten offener Stülpbehälter (4) entsprechend verschoben werden. Durch eine Höhenbewegung des Schlittens kann eine Hebe- und Senkbewegung des Handlingwerkzeugs (14) und des gegriffenen Stülpbehälters (4) ausgeführt werden. Diese Höhenbewegung kann an der Ladestelle (10) zum Einladen der Warenlage (3) im Stülpbehälter (4) und an der Stapelstelle (9) zum Ausladen der Warenlage (3) aus dem Stülpbehälter (4) benutzt werden.

Der Tragboden (19) bildet eine Stützfläche zum Abstützen einer Warenlage (3) an ihrer Unterseite bei dem Verschieben der Warenlage (3) in der Verschieberichtung (24) von der Stapelstelle (9) zur Ladestelle (10) und umgekehrt. Der Tragboden (19) kann durch die Verstelleinrichtung (21) horizontal bewegt und dicht an die Stapelstelle (9) und die Ladestelle (10) angenähert werden. Ferner ist eine Höhenverstellung zur Anpassung der Tragbodenhöhe an die aktuelle Stapelhöhe an der Stapelstelle (9) einerseits und an die z.B. gleichbleibende Ladehöhe an der Ladestelle (10) möglich. Beim Handlinggerät (13) ist ebenfalls eine solche anpassende Höhenverstellung möglich. Die ein oder mehreren Verstelleinrichtungen (20,21), insbesondere ihre steuerbaren Antriebe, sind mit der Steuerung (36) verbunden.

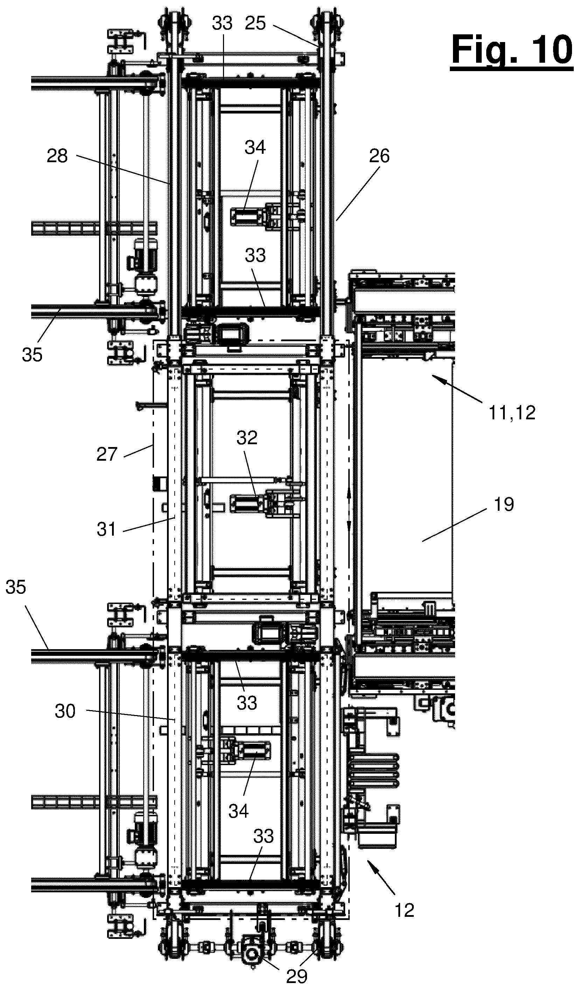

Der Stapeltransporter (12) weist zwei nebeneinander angeordnete und abwechselnd an der Stapelstelle (9) positionierbare Stapelaufnahmen (30,31) für jeweils einen befüllten Behälterstapel (5) und einen puffernden Behälterstapel (6) auf. Die Stapelaufnahmen (12) sind quer zur Verschieberichtung (24) nebeneinander angeordnet und sind quer zur Verschieberichtung (24) beweglich. Der Stapeltransporter (12) ist in den gezeigten Ausführungsbeispielen als Linearförderer (25) mit einer linearen Förderbewegung ausgebildet. Er kann alternativ als Drehförderer mit einer rotierenden Förderbewegung zum Verstellen der Stapelaufnahmen (30,31) ausgestaltet sein. Der Linearförderer (25) ist z.B. als Schlittenförderer ausgebildet. Er weist einen Schlitten (27) mit den bevorzugt zwei Stapelaufnahmen (30,31), eine bevorzugt flurgebundene Schlittenführung (28) und einen Schlittenantrieb (29) auf. Diese Ausbildung des Linearförderers (25) ist z.B. in Figur 10 dargestellt. Der Schlitten (27) weist z.B. ein oder mehrere Längsträger auf, die längs der Verstellrichtung ausgerichtet sind und die eventuell durch Querträger unter Bildung eines Rahmens miteinander verbunden sind. Der Schlitten (27) ist in Figur 10 durch die strichpunktierte Linie angedeutet. Die Stapelaufnahme (30,31) sind durch gestrichelte Linien markiert. Die Schlittenführung (28) kann z.B. eine Schiene mit einer reibungsgünstigen Lagerung, z.B. einer Kugelumlaufführung, aufweisen. Auf diese Schiene können z.B. die eine oder mehreren Längsträger des Schlittens (27) reibungsarm geführt sein. Der Schlittenantrieb (28) kann z.B. als Zahnriemenantrieb ausgebildet sein. Er kann ein oder mehrere mit dem Schlitten (27) endseitig verbundene Zahnriemen und einen Antriebsmotor nebst Getriebe umfassen.

Der Linearförderer (25) ist auf einem Gestell (26) angeordnet und ggf. geführt. Das Gestell (26) kann z.B. die Führungsschienen der Schlittenführung (28) tragen. Das Gestell (26) hat eine größere Länge als der Linearförderer (25) bzw. der Schlitten (27). Der Fahrweg des Schlittens (27) wird dadurch derart dimensioniert, dass abwechselnd die eine und die andere Aufnahmestelle (30,31) an der Stapelstelle (9) positioniert werden kann. Der Schlitten (27) nimmt dabei jeweils eine Endstellung am einen oder anderen Ende des Gestells (26) ein.

Wie Figur 10 verdeutlicht, weist die Stapeleinrichtung (8) bzw. der Stapeltransporter (12) an der Stapelstelle (9) eine Hubeinrichtung (32) auf. Diese ist zum Anheben und Absenken eines Behälterstapels (5,6), insbesondere des jeweiligen Stapelträgers (7), von und auf einer Aufnahmestelle (30,31) am Stapeltransporter (12), insbesondere am Schlitten (27), vorgesehen und ausgebildet.

Der Stapeltransporter (12) ist an den Enden des Gestells (26) jeweils an einen Zuführförderer (35) angeschlossen. Der Anschluss ist vorzugsweise in Querrichtung zur Verschiebe- und Verstellrichtung des Stapeltransporters (12) ausgerichtet. Über die Zuführförderer (35) können befüllte Behälterstapel (5) und puffernde Behälterstapel (6) zu- und abgeführt werden. Der Stapeltransporter (12) kann an den Anschlussstellen der Zuführförderer (35) jeweils einen Übergabeförderer (33), insbesondere Querförderer, mit einem Hubmittel (34) aufweisen. Mit dem heb- und senkbaren Übergabeförderer (33) kann ein Behälterstapel (5,6), insbesondere dessen Stapelträger (7), an der Stapelaufnahme (30,31) angehoben und von dieser gelöst werden. In dieser angehobenen Stellung kann dann der betreffende Behälterstapel (5,6) an den angeschlossenen Zuführförderer (35) abtransportiert werden. Bei der Zufuhr eines Behälterstapels (5,6) von einem Zuführförderer (35) findet dieser Vorgang in umgekehrter Richtung statt.

Der Stapeltransporter (12) und dessen vorgenannte Komponenten sowie die Zuführförderer (35) sind ebenfalls an die Steuerung (36) angeschlossen.

Die Zuführförderer (35) sind ihrerseits an eine Transportvorrichtung (39) angebunden, welche ihrerseits mit einer Speichereinrichtung (37) für Behälterstapel (5,6) verbunden ist. Die Transportvorrichtung (38) kann in beliebig geeigneter Weise, z.B. als Schienenförderer, als automatisch und führerlos fahrendes Transportmittel, z.B. AGV, als einzeln oder mehrfach vorhandener Gabelstapeler oder dergleichen ausgebildet sein. Die Speichereinrichtung (37) kann mehrere Speicherplätze (38) für Behälterstapel (5,6) umfassen. Die Transportvorrichtung (39) kann die Behälterstapel (5,6) von den Zuführförderern (35) zu den Speicherplätzen (38) und in Gegenrichtung transportieren.

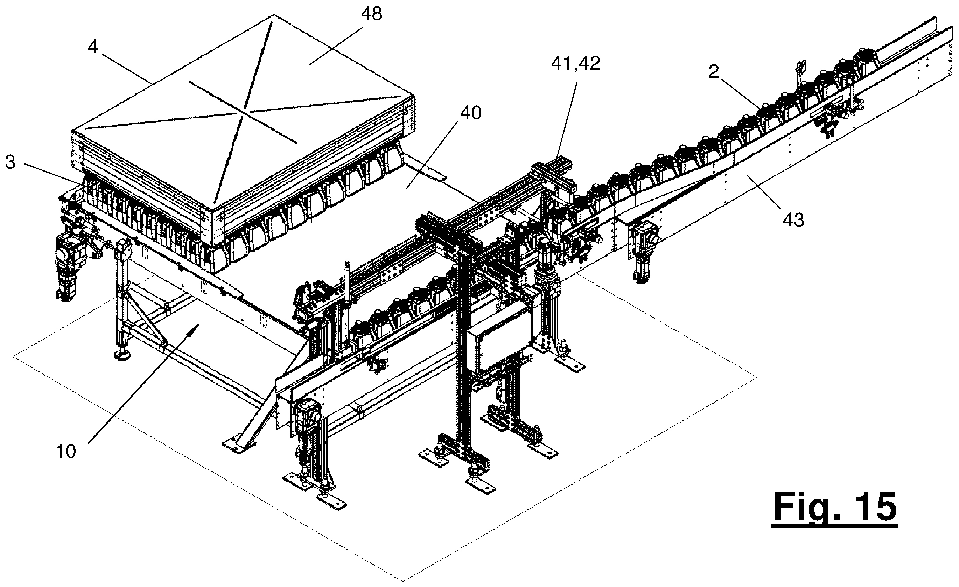

An der Ladestelle (10) kann ein besagter Lagentisch (40) angeordnet sein. Dies ist z.B. in Figur 15 dargestellt. Der Lagentisch (40) kann starr oder beweglich ausgebildet sein, wobei er in der beweglichen Ausführung z.B. einen Band- oder Riemenförderer umfasst, der in Verschieberichtung (24) umlaufend oder reversierend beweglich ist und der an seiner Oberseite eine Warenlage (3) zum besagten Einladen und Ausladen aufnimmt.
der Lagentisch (40) kann mit einer Lagenbildungsvorrichtung (41) oder mit einer Reihenbildungsvorrichtung (42) oder mit einer kombinierten Lagen- und Reihenbildungsvorrichtung (41,42) verbunden sein. Die Vorrichtungen (41,42) können jeweils an einen Warenförderer (43) angeschlossen sein, welcher die Waren (2) in einer einzelnen oder mehrfachen Reihe transportiert.

Bei der in Figur 5 gezeigten Behandlungsanlage (1) ist z.B. die linke Stapeleinrichtung (8) für die Zufuhr von Warenlagen (3) an der Ladestelle (10) und zum Einlagern der Warenlagen (3) in einem befüllten Warenbehälterstapel (5) vorgesehen und ausgebildet. Am Lagentisch (40) ist hierbei eine Lagenbildungsvorrichtung (41) angeordnet, welche aus den reihenweise vom Förderer (43) zugeführten Waren (2), insbesondere Flaschen, eine Warenlage (3) auf dem Lagentisch (40) bildet. Hierbei wird jeweils eine vorbestimmte Reihe von Waren (2) am Warenförderer (43) definiert und auf den Lagentisch (40) sowie im Anschluss an eine dortige bereits vorhandene Warenreihe aufgeschoben.

Die rechte Stapeleinrichtung (8) von Figur 5 ist zum Auslagern und Abführen von Warenlagen (3) an der Ladestelle (10) konzipiert, wobei am Lagentisch (40) eine Reihenbildungsvorrichtung (42) angeordnet ist. Diese löst die Warenlage (3) in einzelne Warenreihen auf und übergibt diese an den Warenförderer (43).

Nachfolgend werden beispielhaft Funktionszyklen der Stapeleinrichtung (8) zum Einlagern und Auslagern von Warenlagen (3) beschrieben.

Zum Einlagern einer Warenlage (3) wird der puffernde Behälterstapel (6) an der Stapelstelle (9) vom Stapeltransporter (12) positioniert. Die Handhabungseinrichtung (11), insbesondere ihr Handlinggerät (13), greift den obersten leeren Stülpbehälter (4), hebt ihn ggf. zum Lösen an und bewegt ihn dann in Verschieberichtung (24) zur Ladestelle (10). Anschließend wird die bereitgestellte Warenlage (3) an der Ladestelle (10) in den leeren Stülpbehälter (4) eingeladen, z.B. durch eine Senkbewegung des Stülpbehälters (4). Anschließend verschiebt die Handhabungseinrichtung (11) die aufgenommene Warenlage (3) und den Stülpbehälter (4) über den Tragboden (19) zur Stapelstelle (9). An der Stapelstelle (9) hat in der Zwischenzeit ein Stapelwechsel stattgefunden, wobei der Stapeltransporter (12) nun den befüllten Behälterstapel (5) bzw. dessen Stapelträger (7) an der Stapelstelle (9) positioniert hat. Die Handhabungseinrichtung (11) überschiebt dann die Warenlage (3) und den in Stülplage gehaltenen Stülpbehälter (4) auf den Stapelträger (7) oder den obersten Stülpbehälter im befüllten Behälterstapel (5). Anschließend gibt die Handhabungseinrichtung (11) den Stülpbehälter (4) frei. Danach kann ein weiterer Stapelwechsel durchgeführt werden, wobei wieder der leere Behälterstapel (6) an der Stapelstelle (9) positioniert wird.

Der vorgenannte Zyklus wiederholt sich, wobei der befüllte Behälterstapel (5) beim Einlagern sukzessive aufgebaut wird und der puffernde Behälterstapel (6) im Gegenzug durch die Entnahme der Stülpbehälter (4) entsprechend sukzessive abgebaut wird.

Wenn beim befüllten Behälterstapel (5) eine vorgesehene Stapelhöhe erreicht ist, wird der befüllte Behälterstapel (5) zum benachbarten Zuführförderer (35) gebracht und von diesem abgeführt sowie an die Transportvorrichtung (39) übergeben.

Hierbei ist auf dem abgebauten puffernden Behälterstapel (6) noch ein letzter leerer Stülpbehälter (4) übrig. Dieser wird mit der Schlittenbewegung bei der Abfuhr des befüllten Behälterstapels (5) an der Stapelstelle (9) positioniert und von der Handhabungseinrichtung (11) zum Einladen einer Warenlage (3) übernommen und gehandhabt. Während dieser Bewegung des Stülpbehälters (4) von der Stapelstelle (9) zur Ladestelle (10) und zurück hat der Stapeltransporter (12) den befüllten Behälterstapel (5) an den Zuführförderer (35) übergeben.

Der Stapeltransporter (12), insbesondere sein Schlitten (27), bewegt sich dann in der Verstell- und Verschieberichtung zurück. Zuvor ist der an der Stapelstelle (9) befindliche Stapelträger (7) des nun fertig abgebauten puffernden Behälterstapels (6) von der Hubeinrichtung (32) angehoben und von der Stapelaufnahme (30) gelöst worden. Durch die Rückfahrbewegung des Stapeltransporters (12) bzw. des Schlittens (27) wird auch die Stapelaufnahme (30,31) unter dem angehobenen Stapelträger (7) vorbeibewegt und gewechselt. Der Stapelträger (7) kann dann von der Hubeinrichtung (32) wieder abgesenkt werden und wird dabei auf die andere Stapelaufnahme (31) umgesetzt. Der Stapelträger (7) dient dann zum Aufbau eines neuen befüllten Behälterstapels (5) und nimmt die von der Handhabungseinrichtung (11) zugeführte Warenlage (11) und den zugehörigen Stülpbehälter (4) auf.

Durch die besagte Rückfahrbewegung des Stapeltransporters (12) bzw. des Schlittens (27) wird die andere Stapelaufnahme (30) am anderen Zuführförderer (35) positioniert, welcher einen neuen puffernden Behälterstapel (6) mit leeren Stülpbehältern dem Übergabeförderer (33) zuführt, welcher ihn dann auf der Stapelaufnahme (30) absetzt und positioniert. Der vorbeschriebene Zyklus zum Einlagern von Warenlagen (3) kann dann erneut starten.

Bei dieser Betriebsweise bilden der Stapelträger (7) und der letzte leere Stülpbehälter (4) des abgebauten puffernden Behälterstapels (6) den Stapelträger (7) und den ersten Stülpbehälter (4) im neuen aufzubauenden befüllten Behälterstapel (5). Die Behälterzahl in den zu- und abgeführten Behälterstapeln (5,6) ist dabei stets gleich groß.

Beim Einlagern von Warenlagen (3) kann der befüllte Behälterstapel (5) vollständig aus befüllten Stülpbehältern (4) aufgebaut bzw. vollständig befüllt werden.

Alternativ ist eine Teilbefüllung des Behälterstapels (5) möglich. Der teilbefüllte Behälterstapel (5) enthält dabei nur einige befüllte Stülpbehälter (4) mit Warenlagen (3) und ist noch nicht vollständig aufgebaut bzw. hat noch nicht die vorgesehene Stapelhöhe erreicht. Der teilbefüllte Behälterstapel (5) kann dann nach Beendigung des Einlagerns von der Handhabungseinrichtung (11) mit leeren Stülpbehältern (4) ergänzt werden, bis er die vorgesehene Stapelhöhe für die Abfuhr erreicht hat. Die Handhabungseinrichtung (11) entnimmt die leeren Stülpbehälter (4) vom puffernden Behälterstapel (6) und legt sie auf den teilbefüllte Behälterstapel (5). Der teilbefüllte Behälterstapel (5) wird dabei in der vorbeschriebenen Weise sukzessive aufgebaut und der puffernde Behälterstapel (6) entsprechend sukzessive abgebaut.

Beim Auslagern von Warenlagen (3) findet der vorbeschriebene Zyklus in umgekehrter Reihenfolge statt, was z.B. in der rechten Stapeleinrichtung (8) von Figur 5 ausgeführt wird.

Die Handhabungseinrichtung (11) entnimmt z.B. von dem neuen und an der Stapelstelle (9) positionierten befüllten Trägerstapel (5) die oberste Warenlage (3) und deren Stülpbehälter (4) und verschiebt sie über den Tragboden (19) zur Ladestelle (10). Hier wird die Warenlage (3) aus dem Stülpbehälter (4) ausgeladen, der dann zur Stapelstelle (9) zurück bewegt wird. An der Stapelstelle (9) hat in der Zwischenzeit ein Stapelwechsel stattgefunden, wobei ein puffernder Behälterstapel (6) bereitgestellt ist und den zugeführten leeren Stülpbehälter (4) übernimmt. Die Handhabungseinrichtung (11) wartet an der Stapelstelle (9) bis ein erneuter Stapelwechsel vollzogen und der befüllte Behälterstapel (5) wieder an der Stapelstelle (9) positioniert ist.

Wenn der puffernde Behälterstapel (6) eine vorgesehene Stapelhöhe erreicht hat und der befüllte Trägerstapel (5) bis auf die letzte Warnlage (3) und dem letzten Stülpbehälter (4) abgebaut ist, wird der puffernde Behälterstapel (6) vom Stapeltransporter (12) abgeführt und an den benachbarten Zuführförderer (35) übergeben. Während dieser Zeit wird von der Handhabungseinrichtung (11) die letzte Warenlage (3) mit dem Stülpbehälter (4) zur Ladestelle (10) verschoben und dort ausgeladen.

In dieser Zeitspanne hat der Stapeltransporter (12) einerseits die Abfuhr des puffernden Behälterstapels (6) vollzogen und andererseits eine Verstell- oder Verschiebebewegung ausgeführt, bei welcher in der vorbeschriebenen Weise der vom befüllten Behälterstapel (5) übrig gebliebene Stapelträger (7) von der Hubeinrichtung (32) angehoben und auf die Stapelaufnahme (30) umgesetzt worden ist, wobei er an der Stapelstelle (9) zum Aufbau eines neuen puffernden Behälterstapels (6) bereit steht und den gerade zugeführten leeren Stülpträger (4) übernimmt. In dieser Zeitspanne ist außerdem ein neuer befüllter Trägerstapel (5) dem Stapeltransporter (12) zugeführt worden.

Der vorbeschriebene Auslager-Zyklus kann dann erneut durchgeführt werden. Bei diesem Zyklus bilden der Stapelträger (7) und der letzte Stülpbehälter (4) des gerade abgebauten befüllten Trägerstapels (5) den Stapelträger (7) und den ersten leeren Stülpbehälter (4) des neu aufzubauenden puffernden Behälterstapels (6). Beim Auslagern bleiben somit die Behälterzahlen in den befüllten und den puffernden Behälterstapeln (5,6) ebenfalls gleich.

Beim vorbeschriebenen Auslagern von Warenlagen (3) kann der befüllte Behälterstapel (5) aus befüllten Stülpbehältern (4) vollständig abgebaut bzw. vollständig geleert werden.

Alternativ ist eine Teilentleerung des Behälterstapels (5) möglich. Der teilentleerte Behälterstapel (5) enthält dabei noch einige befüllte Stülpbehälter (4) mit Warenlagen (3) und ist noch nicht vollständig abgebaut. Der teilentleerte Behälterstapel (5) kann dann nach Beendigung des Auslagerns von der Handhabungseinrichtung (11) mit leeren Stülpbehältern (4) ergänzt werden, bis er die vorgesehene Stapelhöhe für die Abfuhr erreicht hat. Die Handhabungseinrichtung (11) entnimmt die leeren Stülpbehälter (4) vom puffernden Behälterstapel (6) und legt sie auf dem teilentleerten Behälterstapel (5) ab. Der teilentleerte Behälterstapel (5) wird dabei in der vorbeschriebenen Weise sukzessive aufgebaut und der puffernde Behälterstapel (6) entsprechend sukzessive abgebaut.

Die vom puffernden Behälterstapel (6) entnommenen leeren Stülpbehälter (4) wurden zuvor beim Auslagern der Warenlagen (3) auf dem puffernde Behälterstapel (6) bzw. auf dem Stapelträger (7) abgelegt und aufgestapelt. Die Behälterzahl beim teilweisen Auslagern und beim anschließenden Ergänzen des teilentleerten Behälterstapels (5) ist gleich groß.

Dies ist auch beim vorbeschriebenen Einlagern und Ergänzen des teilbefüllten Behälterstapels (5) der Fall. Zudem kann der letzte Stülpbehälter (4) des jeweiligen beim Ein- und Auslagern gerade abgebauten Behälterstapels (5,6) in der vorbeschriebenen Weise von der Handhabungseinrichtung (11) zum Aufbau eines neuen Behälterstapels (6,5) benutzt werden.

Die Handhabungseinrichtung (11) kann ggf. derart abgewandelt werden, dass sie beim Ergänzen eines teilbefüllten oder teilentleerten Behälterstapels (5) mehrere leere Stülpbehälter (4) gemeinsam, z.B. in einem kleinen Stapel, handhaben und auf den teilbefüllten Behälterstapel (5) umsetzen kann.

Der abgeführte teilbefüllte oder teilentleerte und mit leeren Stülpbehältern (4) ergänzte Behälterstapel (5) kann in der Speichereinrichtung (37) gespeichert werden. Er kann zu einem späteren Zeitpunkt von der Stapeleinrichtung (8) vollständig befüllt oder vollständig geleert werden. Die ergänzten leeren Stülpbehälter (4) können dabei zunächst abgenommen und auf dem puffernde Behälterstapel (6) bzw. auf dem Stapelträger (7) abgelegt und aufgestapelt werden. Sie können dann zum Einlagern der Warenlagen (3) in der vorbeschriebenen Weise benutzt werden. Es sind auch Zwischenstadien mit einer weiteren Teilbefüllung oder Teilentleerung des Behälterstapels (5) möglich.

Bei der Ausführungsform von Figur 5 werden die beiden Stapeleinrichtungen (8) nur zum Einlagern und Auslagern benutzt. Dies ist z.B. sinnvoll, wenn die Zufuhr und die Abfuhr von Waren (2) auf den Warenförderern (43) gleichzeitig stattfinden. Dies kann z.B. geschehen, wenn die Warenförderer (43) an eine nichtdargestellte Fülllinie in der Behandlungsanlage (1) angeschlossen sind. Hierbei werden z.B. von der rechten Stapeleinrichtung (8) in Figur 5 Warenlagen (3) aus Stülpbehältern (2) ausgelagert und über den Warenförderer (43) der Fülleinrichtung zugeführt. Über den anderen Warenförderer (43) gelangen dann befüllte Behälter (2) zur linken Stapeleinrichtung (8) und werden nach der Bildung von Warenlagen (3) in einen befüllten Behälterstapel (5) eingelagert. In der Speichereinrichtung (37) können Warenlagen (3) aus leeren und aus befüllten Behältern (2) gespeichert werden.

In einer anderen und nicht dargestellten Ausführungsform kann eine Stapeleinrichtung (8) sowohl das Einlagern als auch das Auslagern von Warenlagen (3) durchführen. Hierbei kann es sich wiederum um Warenlagen (3) aus gleichen oder unterschiedlichen Waren (2), insbesondere leeren und befüllten Stülpbehältern (2), handeln. Die Stapeleinrichtungen (8) sind außerdem in der Lage, in anderer Weise unterschiedliche Waren (2), z.B. unterschiedliche Behälterformate, zu handhaben und in befüllte Behälterstapel (5) einzulagern sowie auszulagern.

Abwandlungen der gezeigten und beschriebenen Ausführungsformen sind in verschiedener Weise möglich. In Abwandlung der vorbeschriebenen Zyklen kann mit der Abfuhr eines aufgebauten Behälterstapels (5,6) gewartet werden, bis der andere Behälterstapel (6,5) vollständig abgebaut ist. Die vorbeschriebene Funktion der Benutzung des letzten Stülpbehälters im gerade abgebauten Behälterstapel zur Bildung des ersten Stülpbehälters im neu aufzubauenden Behälterstapel kann dabei entfallen.

Ferner kann die Handhabungseinrichtung (11) konstruktiv und funktional abgewandelt werden. Das Handlinggerät (13) kann z.B. als mehrachsiger Industrieroboter, insbesondere Gelenkarmroboter, ausgestaltet sein. Ferner können Hebe- und Senkbewegungen zum Ein- und Ausladen einer Warenlage (3) in und aus einem Stülpbehälter (4) durch eine Hebe- und Senkbewegung an der Stapelstelle (9) und/oder der Ladestelle (10) bewirkt werden. Der Stülpbehälter (4) kann dabei in seiner Höhenlage verbleiben oder kann ebenfalls entsprechend gehoben oder gesenkt werden. Der Stapeltransporter (12) kann statt als Linearförderer (25) als Ring- oder Kreisförderer oder Umlaufförderer mit einem geraden Abschnitt im Bereich der Stapelstelle (9) oder in anderer Weise ausgebildet sein.

### BEZUGSZEICHENLISTE

- 1: Behandlungsanlage
- 2: Ware, Flasche
- 3: Warenlage
- 4: Stülpbehälter
- 5: Behälterstapel, befüllt
- 6: Behälterstapel, leer
- 7: Stapelträger mobil
- 8: Stapeleinrichtung
- 9: Stapelstelle
- 10: Ladestelle
- 11: Handhabungseinrichtung
- 12: Stapeltransporter
- 13: Handlinggerät für Stülpbehälter
- 14: Handlingwerkzeug
- 15: Greifeinrichtung
- 16: Greifer, Sauggreifer
- 17: Greifer, Steckgreifer
- 18: Positioniereinrichtung
- 19: Tragboden
- 20: Verstelleinrichtung Handlinggerät
- 21: Verstelleinrichtung Tragboden
- 22: Gegengewicht
- 23: Maschinengestell
- 24: Verschieberichtung
- 25: Linearförderer
- 26: Gestell
- 27: Schlitten
- 28: Schlittenführung
- 29: Schlittenantrieb
- 30: Stapelaufnahme
- 31: Stapelaufnahme
- 32: Hubeinrichtung
- 33: Übergabeförderer, Querförderer
- 34: Hubmittel
- 35: Zuführförderer
- 36: Steuerung
- 37: Speichereinrichtung
- 38: Speicherplatz
- 39: Transportvorrichtung
- 40: Lagentisch
- 41: Lagenbildungsvorrichtung
- 42: Reihenbildungsvorrichtung
- 43: Warenförderer
- 44: Trägerdecke
- 45: Trägerboden
- 46: Transportaufnahme
- 47: Behälterwandung
- 48: Behälterboden
- 49: Behälteröffnung
- 50: Verrastung

## Patentansprüche

1. Stapeleinrichtung für Waren (2) in Form von Warenlagen (3), wobei die Stapeleinrichtung (8) aufweist
- eine Ladestelle (10) für die Zufuhr und/oder Abfuhr von Warenlagen (3),
- eine Stapelstelle (9) für die Anordnung eines Behälterstapels (5,6), welcher zumindest einen mobilen Stapelträger (7) und darauf aufgestapelte kastenartige, an der Unterseite offene und aufeinander stapelbare Stülpbehälter (4) umfasst,
- eine zwischen der Stapelstelle (9) und der Ladesstelle (10) angeordnete Handhabungseinrichtung (11),
- wobei die Handhabungseinrichtung (11) dazu ausgebildet ist, einen an der Unterseite offenen Stülpbehälter (4) zu handhaben und mitsamt einer darin aufgenommenen Warenlage (3) von der Stapelstelle (9) zur Ladestelle (10) und/oder von der Ladestelle (10) zur Stapelstelle (9) zu verschieben, **dadurch gekennzeichnet, dass** die Stapeleinrichtung (8) einen gesteuert beweglichen, bevorzugt als Linearförderer (26) ausgebildeten, Stapeltransporter (12) aufweist, der dazu ausgebildet ist, an der Stapelstelle (9) abwechselnd einen befüllten Behälterstapel (5) aus Stülpbehältern (4) mit darin jeweils aufgenommenen Warenlagen (3) und einen puffernden Behälterstapel (6) aus leeren Stülpbehältern (4) anzuordnen, wobei der Stapeltransporter (12) mindestens zwei nebeneinander angeordnete und abwechselnd an der Stapelstelle (9) positionierbare Stapelaufnahmen (30,31) aufweist, von denen eine für einen befüllten Behälterstapel (5) und eine andere für einen puffernden Behälterstapel (6) vorgesehen ist, wobei der Stapeltransporter (12) und die Stapelaufnahmen (30,31) bevorzugt quer zu einer bevorzugt linearen Verschieberichtung (24) der Handhabungseinrichtung (11) beweglich sind.

2. Stapeleinrichtung nach Anspruch 1, **dadurch gekennzeichnet, dass** die Stapeleinrichtung (8), insbesondere die Handhabungseinrichtung (11), dazu ausgebildet ist, die Warenlagen (3) an der Ladestelle (10) jeweils in einen vom puffernden Behälterstapel (6) entnommenen leeren Stülpbehälter (4) einzuladen und mit diesem in einem sukzessive aufzubauenden befüllten Behälterstapel (5) an der Stapelstelle (9) einzulagern, und/oder Warenlagen (3) in Stülpbehältern (4) aus einem sukzessive abzubauenden befüllten Behälterstapel (5) an der Stapelstelle (9) auszulagern und die jeweilige Warenlage (3) aus dem Stülpbehälter (4) an der Ladestelle (10) auszuladen sowie den geleerten Stülpbehälter (4) dem puffernden Behälterstapel (6) zu übergeben.

3. Stapeleinrichtung nach einem der vorhergehenden Ansprüche, **dadurch gekennzeichnet, dass** die Stapeleinrichtung (8) an der Stapelstelle (9) eine Hubeinrichtung (32) zum Anheben und Absenken eines Behälterstapels (5,6) von und auf den Stapeltransporter (12) aufweist und bevorzugt der Stapeltransporter (12) an Zuführförderer (35) für eine Zufuhr und/oder Abfuhr von befüllten Behälterstapeln (5) und puffernden Behälterstapeln (6) angeschlossen ist.

4. Stapeleinrichtung nach einem der vorhergehenden Ansprüche, **dadurch gekennzeichnet, dass** die Handhabungseinrichtung (11) ein mehrachsig bewegliches Handlinggerät (13) für die Stülpbehälter (4) und ggf. die darin jeweils aufgenommene Warenlage (3) aufweist, wobei das Handlinggerät (13) zur Handhabung der an der Unterseite offenen Stülpbehälter (4) ausgebildet ist und wobei die Handhabungseinrichtung (11) bevorzugt einen mit dem Handlinggerät (13) mitbewegbaren Tragboden (19) aufweist und wobei vorzugsweise das Handlinggerät (13) und der Tragboden (19) in der Höhe und ggf. seitlich beweglich angeordnet sind, wobei die Handhabungseinrichtung (11) zumindest eine Verstelleinrichtung (20,21) und ggf. ein Gegengewicht (22) aufweist.

5. Stapeleinrichtung nach Anspruch 4, **dadurch gekennzeichnet, dass** das Handlinggerät (13) der Handhabungseinrichtung (11) ein Handlingwerkzeug (14) zum lösbaren Halten eines nach unten offenen Stülpbehälters (4) aufweist, wobei das Handlingwerkzeug (14) als Greifeinrichtung (15) ausgebildet sein kann.

6. Stapeleinrichtung nach einem der vorhergehenden Ansprüche, **dadurch gekennzeichnet, dass** die Stapeleinrichtung (8) dazu ausgebildet ist, beim Einlagern und Auslagern von Warenlagen (3) den befüllten Trägerstapel (5) vollständig oder teilweise mit Warenlagen (3) zu befüllen oder vollständig oder teilweise von Warenlagen (3) zu entleeren, wobei bei einer Teilbefüllung oder Teilentleerung nach dem Einlagern oder Auslagern auf den Trägerstapel (5) leere Stülpbehälter (4) vom puffernden Behälterstapel (6) bis zum Erreichen einer vorgegebenen Stapelhöhe umgesetzt werden.

7. Behandlungsanlage für Waren (2), insbesondere leere oder gefüllte Flaschen, wobei die Behandlungsanlage (1) eine Stapeleinrichtung (8) für die Waren (2) in Form von Warenlagen (3) umfasst, **dadurch gekennzeichnet, dass** die Stapeleinrichtung (8) nach mindestens einem der Ansprüche 1 bis 6 ausgebildet ist.

8. Behandlungsanlage nach Anspruch 7, **dadurch gekennzeichnet, dass** die Behandlungsanlage (1) eine Speichereinrichtung (37) für Behälterstapel (5,6) aus Stülpbehältern (4) aufweist.

9. Verfahren zum Stapeln von Waren (2) in Form von Warenlagen (3) mittels einer Stapeleinrichtung (8),
- wobei Warenlagen (3) an einer Ladestelle (10) zugeführt und/oder abgeführt werden,
- wobei an einer Stapelstelle (9) ein Behälterstapel (5,6) angeordnet wird, welcher zumindest einen mobilen Stapelträger (7) und darauf aufgestapelte kastenartige, an der Unterseite offene und aufeinander stapelbare Stülpbehälter (4) umfasst,
- wobei zwischen der Stapelstelle (9) und der Ladesstelle (10) eine Handhabungseinrichtung (11) angeordnet wird,
- wobei die Handhabungseinrichtung (11) einen an der Unterseite offenen Stülpbehälter (4) handhabt und mitsamt einer darin aufgenommenen Warenlage (3) von der Stapelstelle (9) zur Ladestelle (10) und/oder von der Ladestelle (10) zur Stapelstelle (9) verschiebt, **dadurch gekennzeichnet, dass** mit einem gesteuert beweglichen Stapeltransporter (12) an der Stapelstelle (9) abwechselnd ein befüllter Behälterstapel (5) aus Stülpbehältern (4) mit darin jeweils aufgenommenen Warenlagen (3) und ein puffernder Behälterstapel (6) aus leeren Stülpbehältern (4) angeordnet wird, wobei der Stapeltransporter (12) mindestens zwei nebeneinander angeordnete und abwechselnd an der Stapelstelle (9) positionierbare Stapelaufnahmen (30,31) aufweist, von denen eine für einen befüllten Behälterstapel (5) und eine andere für einen puffernden Behälterstapel (6) vorgesehen ist, wobei der Stapeltransporter (12) und die Stapelaufnahmen (30,31) bevorzugt quer zu einer bevorzugt linearen Verschieberichtung (24) der Handhabungseinrichtung (11) beweglich sind.

10. Verfahren nach Anspruch 9, **dadurch gekennzeichnet, dass** die Handhabungseinrichtung (11) beim Einlagern der Warenlagen (3) und beim Aufbau eines gefüllten Behälterstapels (5) jeweils einen leeren Stülpbehälter (4) vom puffernden Behälterstapel (6) an der Stapelstelle (9) entnimmt, der Ladestelle (10) zuführt, dort eine bereit gestellte Warenlage (3) im Stülpbehälter (4) einlädt sowie den Stülpbehälter (4) mit der aufgenommenen Warenlage (3) zur Stapelstelle (9) und auf den dort inzwischen angeordneten befüllten Behälterstapel (5) verschiebt und dann den Stülpbehälter (4) freigibt, wobei anschließend der Stapeltransporter (12) den befüllten Behälterstapel (5) wegbewegt und den puffernden Behälterstapel (6) an der Stapelstelle (9) anordnet.

11. Verfahren nach Anspruch 9 oder 10, **dadurch gekennzeichnet, dass** die Handhabungseinrichtung (11) beim Auslagern der Warenlagen (3) jeweils einen Stülpbehälter (4) mit einer aufgenommenen Warenlage (3) an der Stapelstelle (9) vom befüllten Behälterstapel (5) entnimmt und zur Ladestelle (10) verschiebt, dort die Warenlage (3) auslädt und dann den leeren Stülpbehälter (4) zur Stapelstelle (9) zurückbewegt und auf den dort inzwischen angeordneten puffernden Behälterstapel (6) abgibt, wobei anschließend der Stapeltransporter (12) den puffernden Behälterstapel (6) wegbewegt und den befüllten Behälterstapel (5) an der Stapelstelle (9) anordnet.

12. Verfahren nach Anspruch 9, 10 oder 11, **dadurch gekennzeichnet, dass** die Stapeleinrichtung (8) beim Einlagern von Warenlagen (3) den befüllten Trägerstapel (5) vollständig oder teilweise mit Warenlagen (3) befüllt, wobei bei einer Teilbefüllung nach dem Einlagern auf den Trägerstapel (5) leere Stülpbehälter (4) vom puffernden Behälterstapel (6) bis zum Erreichen einer vorgegebenen Stapelhöhe umgesetzt werden und/oder die Stapeleinrichtung (8) beim Auslagern von Warenlagen (3) den befüllten Trägerstapel (5) vollständig oder teilweise von Warenlagen (3) entleert, wobei bei einer Teilentleerung nach dem Auslagern auf den Trägerstapel (5) leere Stülpbehälter (4) vom puffernden Behälterstapel (6) bis zum Erreichen einer vorgegebenen Stapelhöhe umgesetzt werden.

13. Verfahren nach einem der Ansprüche 9 bis 12, **dadurch gekennzeichnet, dass** am Ende des Einlagerns und bei Erreichen einer vorgegebenen Stapelhöhe der befüllte Behälterstapel (5) von dem Stapeltransporter (12) abgeführt und ein neuer puffernder Behälterstapel (6) dem Stapeltransporter (12) zugeführt wird und/oder am Ende des Auslagerns der puffernde Behälterstapel (6) von dem Stapeltransporter (12) abgeführt und ein neuer befüllter Behälterstapel (5) dem Stapeltransporter (12) zugeführt wird.

14. Verfahren nach einem der Ansprüche 9 bis 13, **dadurch gekennzeichnet, dass** die Abfuhr eines befüllten Behälterstapels (5) und die Zufuhr eines puffernden Behälterstapels (6) und/oder die Zufuhr eines befüllten Behälterstapels (5) und die Abfuhr eines puffernden Behälterstapels (6) von oder zu dem Stapeltransporter (12) zeitlich mit einer bidirektionalen Bewegung der Handhabungseinrichtung (11) mit einem Stülpbehälter (4) zwischen der Stapelstelle (9) der Ladestelle (10) überschnitten wird.

15. Verfahren nach einem der Ansprüche 9 bis 14, **dadurch gekennzeichnet, dass** während der Abfuhr und Zufuhr der Behälterstapel (5,6) ein mobiler Stapelträger (7) des gerade abgebauten Behälterstapels (5,6) an den Stapelaufnahmen (30,31) des Stapeltransporters (12) umgesetzt wird.

## Claims

1. Stacking device for goods (2) in the form of goods layers (3), wherein the stacking device (8) comprises
- a loading point (10) for the supply and/or discharge of goods (3),
- a stacking point (9) for the arrangement of a container stack (5, 6) which comprises at least one mobile stack carrier (7) and box-like slip-on containers (4) which are stacked on the former, are open at the bottom and can be stacked on one another,
- a handling device (11) arranged between the stacking point (9) and the loading point (10),
- wherein the handling device (11) is designed to handle an slip-on container (4), which is open on the underside, and to move it together with a goods layer (3) received therein from the stacking point (9) to the loading point (10) and/or from the loading point (10) to the stacking point (9), **characterized in that** the stacking device (8) has a stack transporter (12) which is movable in a controlled manner, is preferably designed as a linear conveyor (26), and is designed to alternately arrange a filled container stack (5) comprising slip-on containers (4) with goods layers (3) received in each of them, and a buffer-storing container stack (6) comprising empty slip-on containers (4) at the stacking point (9), wherein the stack transporter (12) has at least two stack receptacles (30, 31) which are arranged side-by-side and are positionable alternately at the stacking point (9), one of which is provided for a filled container stack (5) and another for a buffer-storing container stack (6), wherein the stack transporter (12) and the stack receptacles (30, 31) are preferably movable transversely with respect to a preferably linear displacement direction (24) of the handling device (11).

2. Stacking device according to Claim 1, **characterized in that** that the stacking device (8), in particular the handling device (11), is designed to load the goods layers (3) at the loading point (10) in each case into an empty slip-on container (4) taken from the buffer-storing container stack (6) and to store them with this in a filled container stack (5) to be built up successively at the stacking point (9), and/or to remove goods layers (3) in slip-on containers (4) from a filled container stack (5) to be removed successively from storage at the stacking point (9), and to unload the respective goods layer (3) from the slip-on container (4) at the loading point (10), and to transfer the emptied slip-on container (4) to the buffering container stack (6).

3. Stacking device according to either of the preceding claims, **characterized in that** the stacking device (8) has, at the stacking point (9), a lifting device (32) for lifting and lowering a container stack (5, 6) from and onto the stack transporter (12), and preferably the stack transporter (12) is connected to feed conveyors (35) for feeding and/or discharging filled container stacks (5) and buffer-storing container stacks (6).

4. Stacking device according to one of the preceding claims, **characterized in that** the handling device (11) has a multi-axis movable handling unit (13) for the slip-on containers (4) and optionally the goods layer (3) received in each of them, wherein the handling unit (13) is designed for handling the slip-on containers (4) which are open on the underside, and wherein the handling device (11) preferably has a bearing base (19) which can be moved together with the handling unit (13), and wherein preferably the handling unit (13) and the bearing base (19) are arranged so as to be movable vertically and optionally laterally, wherein the handling device (11) has at least one adjustment device (20, 21) and optionally a counterweight (22).

5. Stacking device according to Claim 4, **characterized in that** the handling unit (13) of the handling device (11) has a handling tool (14) for detachably holding a downwardly open slip-on container (4), wherein the handling tool (14) can be designed as a gripping device (15).

6. Stacking device according to one of the preceding claims, **characterized in that** the stacking device (8) is designed to fill the filled carrier stack (5) completely or partially with goods layers (3) or to empty it completely or partially of goods layers (3) during storage and removal of goods layers (3), wherein, in the case of partial filling or partial emptying after storage on or removal from the carrier stack (5), empty slip-on containers (4) are moved from the buffer-storing container stack (6) until a predetermined stack height is reached.

7. Manipulating system for goods (2), in particular empty or filled bottles, wherein the manipulating system (1) comprises a stacking device (8) for the goods (2) in the form of goods layers (3), **characterized in that** the stacking device (8) is designed according to at least one of Claims 1 to 6.

8. Manipulating system according to Claim 7, **characterized in that** the manipulating system (1) has a storage device (37) for container stacks (5, 6) comprising slip-on containers (4).

9. Method for stacking goods (2) in the form of goods layers (3) by means of a stacking device (8),
- wherein goods layers (3) are supplied and/or discharged at a loading point (10),
- wherein, at a stacking point (9), a container stack (5, 6) is arranged, which comprises at least one mobile stack carrier (7) and box-like slip-on containers (4) which are stacked on it, are open at the bottom and can be stacked on one another,
- a handling device (11) is arranged between the stacking point (9) and the loading point (10),
- wherein the handling device (11) handles a slip-on container (4), which is open at the bottom, and moves it together with a goods layer (3) received therein from the stacking point (9) to the loading point (10) and/or from the loading point (10) to the stacking point (9), **characterized in that** a stack transporter (12) which is movable in a controlled manner alternately arranges, at the stacking point (9), a filled container stack (5) comprising slip-on containers (4) with goods layers (3) received therein in each case and a buffer-storing container stack (6) comprising empty slip-on containers (4), wherein the stack transporter (12) has at least two stack receptacles (30, 31) which are arranged side-by-side and are alternately positionable at the stacking point (9), one of which is provided for a filled container stack (5) and another for a buffer-storing container stack (6), wherein the stack transporter (12) and the stack receptacles (30, 31) are preferably movable transversely with respect to a preferably linear displacement direction (24) of the handling device (11).

10. Method according to Claim 9, **characterized in that** the handling device (11) in each case removes an empty slip-on container (4) from the buffer-storing container stack (3) at the stacking point (5) during the storage of the goods layers (6) and during the construction of a filled container stack (9), feeds it to the loading point (10), loads a provided goods layer (3) into the slip-on container (4) there, and moves the slip-on container (4) with the received goods layer (3) to the stacking point (9) and onto the filled container stack (5) which has been arranged there in the meantime, and then releases the slip-on container (4), wherein the stack transporter (12) then moves the filled container stack (5) away and arranges the buffer-storing container stack (6) at the stacking point (9).

11. Method according to Claim 9 or 10, **characterized in that**, when the goods layers (3) are removed, the handling device (11) removes in each case one slip-on container (4) with a received goods layer (3) at the stacking point (9) from the filled container stack (5) and moves it to the loading point (10), unloads the goods layer (3) there and then moves the empty slip-on container (4) back to the stacking point (9) and discharges it to the buffer-storing container stack (6) which has been arranged there in the meantime, wherein the stack transporter (12) then moves the buffer-storing container stack (6) away and arranges the filled container stack (5) at the stacking point (9).

12. Method according to Claim 9, 10 or 11, **characterized in that** the stacking device (8) fills the filled carrier stack (5) completely or partially with goods layers (3) when storing goods layers (3), wherein, in the case of partial filling after storage on the carrier stack (5), empty slip-on containers (4) are moved from the buffer-storing container stack (6) until a predetermined stack height is reached and/or the stacking device (8) empties the filled carrier stack (5) completely or partially of goods layers (3) when removing goods layers (3) from storage, wherein, in the case of partial emptying after removal from storage onto the carrier stack (5), empty slip-on containers (4) are moved from the buffer-storing container stack (6) until a predetermined stack height is reached.

13. Method according to one of Claims 9 to 12, **characterized in that**, at the end of storage and when a predetermined stack height is reached, the filled container stack (5) is discharged from the stack transporter (12) and a new buffer-storing container stack (6) is fed to the stack transporter (12) and/or, at the end of removal from storage, the buffer-storing container stack (6) is discharged from the stack transporter (12) and a new filled container stack (5) is fed to the stack transporter (12).

14. Method according to one of Claims 9 to 13, **characterized in that** the discharge of a filled container stack (5) and the supply of a buffer-storing container stack (6) and/or the supply of a filled container stack (5) and the discharge of a buffer-storing container stack (6) from or to the stack transporter (12) is overlapped temporally by a bidirectional movement of the handling device (11) with a slip-on container (4) between the stacking point (9) of the charging point (10).

15. Method according to one of Claims 9 to 14, **characterized in that**, during the removal and supply of the container stacks (5, 6), a mobile stack carrier (7) of the newly depleted container stack (5, 6) is moved to the stack receptacles (30, 31) of the stack transporter (12).

## Revendications

1. Dispositif d'empilage pour marchandises (2) sous forme de couches de marchandises (3), le dispositif d'empilage (8) présentant
- un emplacement de chargement (10) pour l'acheminement et/ou l'évacuation de couches de marchandises (3),
- un emplacement d'empilage (9) pour l'agencement d'une pile de récipients (5, 6), qui comprend au moins un support de pile mobile (7) et, empilés dessus, des récipients à recouvrement (4) en forme de caissons, ouverts sur le côté inférieur et empilables les uns sur les autres,
- un dispositif de manipulation (11) agencé entre l'emplacement d'empilage (9) et l'emplacement de chargement (10),
- le dispositif de manutention (11) étant réalisé pour manipuler un récipient à recouvrement (4) ouvert sur le côté inférieur et pour le déplacer, avec une couche de marchandises (3) reçue dans celui-ci, de l'emplacement d'empilage (9) vers l'emplacement de chargement (10) et/ou de l'emplacement de chargement (10) vers l'emplacement d'empilage (9), **caractérisé en ce que** le dispositif d'empilage (8) présente un transporteur de pile (12) déplaçable de manière commandée, de préférence réalisé sous forme de convoyeur linéaire (26), qui est réalisé pour agencer en alternance, au niveau de l'emplacement d'empilage (9), une pile de récipients remplis (5) composée de récipients à recouvrement (4) avec des couches de marchandises (3) reçues à l'intérieur et une pile de récipients tampons (6) composée de récipients à recouvrement vides (4), le transporteur de pile (12) présentant au moins deux réceptacles de pile (30, 31) agencés côte à côte et pouvant être positionnés en alternance au niveau de l'emplacement d'empilage (9), dont un est prévu pour une pile de récipients remplis (5) et un autre pour une pile de récipients tampons (6), le transporteur de pile (12) et les réceptacles de piles (30, 31) étant de préférence déplaçables transversalement par rapport à une direction de déplacement (24) de préférence linéaire du dispositif de manipulation (11).

2. Dispositif d'empilage selon la revendication 1, **caractérisé en ce que** le dispositif d'empilage (8), notamment le dispositif de manipulation (11), est réalisé pour charger les couches de marchandises (3) au niveau de l'emplacement de chargement (10) respectivement dans un récipient à recouvrement vide (4) prélevé de la pile de récipients tampons (6) et pour les stocker avec celui-ci dans une pile de récipients remplis (5) à monter successivement au niveau de l'emplacement d'empilage (9), et/ou pour déstocker des couches de marchandises (3) dans des récipients à recouvrement (4) à partir d'une pile de récipients remplis (5) à démonter successivement au niveau de l'emplacement d'empilage (9) et pour décharger la couche de marchandises (3) respective du récipient à recouvrement (4) au niveau de l'emplacement de chargement (10), ainsi que pour transférer le récipient à recouvrement vidé (4) vers la pile de récipients tampons (6).

3. Dispositif d'empilage selon l'une quelconque des revendications précédentes, **caractérisé en ce que** le dispositif d'empilage (8) présente, au niveau de l'emplacement d'empilage (9), un dispositif de levage (32) pour soulever et abaisser une pile de récipients (5, 6) depuis et vers le transporteur de pile (12) et, de préférence, le transporteur de pile (12) est raccordé à un convoyeur d'acheminement (35) pour un acheminement et/ou une évacuation de piles de récipients remplis (5) et de piles de récipients tampons (6).

4. Dispositif d'empilage selon l'une quelconque des revendications précédentes, **caractérisé en ce que** le dispositif de manipulation (11) présente un appareil de manutention (13) déplaçable sur plusieurs axes pour les récipients à recouvrement (4) et éventuellement la couche de marchandises (3) reçue dans ceux-ci, l'appareil de manutention (13) étant réalisé pour la manipulation des récipients à recouvrement (4) ouverts sur le côté inférieur, et le dispositif de manipulation (11) présentant de préférence un fond porteur (19) déplaçable avec l'appareil de manutention (13), et l'appareil de manutention (13) et le fond porteur (19) étant de préférence agencés de manière déplaçable en hauteur et éventuellement latéralement, le dispositif de manipulation (11) présentant au moins un dispositif de réglage (20, 21) et éventuellement un contrepoids (22).

5. Dispositif d'empilage selon la revendication 4, **caractérisé en ce que** l'appareil de manutention (13) du dispositif de manipulation (11) présente un outil de manutention (14) pour maintenir de manière amovible un récipient à recouvrement (4) ouvert vers le bas, l'outil de manutention (14) pouvant être réalisé sous forme de dispositif de préhension (15).

6. Dispositif d'empilage selon l'une quelconque des revendications précédentes, **caractérisé en ce que** le dispositif d'empilage (8) est réalisé pour, lors du stockage et du déstockage de couches de marchandises (3), remplir entièrement ou partiellement la pile de supports remplis (5) avec des couches de marchandises (3) ou la vider entièrement ou partiellement de couches de marchandises (3), des récipients à recouvrement vides (4) étant transférés depuis la pile de récipients tampons (6) sur la pile de supports (5) lors d'un remplissage partiel ou d'un vidage partiel après le stockage ou le déstockage jusqu'à ce qu'une hauteur de pile prédéfinie soit atteinte.

7. Installation de traitement pour marchandises (2), notamment bouteilles vides ou pleines, l'installation de traitement (1) comprenant un dispositif d'empilage (8) pour les marchandises (2) sous forme de couches de marchandises (3), **caractérisée en ce que** le dispositif d'empilage (8) est réalisé selon au moins l'une quelconque des revendications 1 à 6.

8. Installation de traitement selon la revendication 7, **caractérisée en ce que** l'installation de traitement (1) présente un dispositif d'emmagasinage (37) pour des piles de récipients (5, 6) composées de récipients à recouvrement (4).

9. Procédé pour empiler des marchandises (2) sous forme de couches de marchandises (3) au moyen d'un dispositif d'empilage (8),
- des couches de marchandises (3) étant acheminées vers et/ou évacuées d'un emplacement de chargement (10),
- une pile de récipients (5, 6) étant agencée au niveau d'un emplacement d'empilage (9), laquelle comprend au moins un support de pile mobile (7) et, empilés dessus, des récipients à recouvrement (4) en forme de caissons, ouverts sur le côté inférieur et empilables les uns sur les autres,
- un dispositif de manipulation (11) étant agencé entre l'emplacement d'empilage (9) et l'emplacement de chargement (10),
- le dispositif de manipulation (11) manipulant un récipient à recouvrement (4) ouvert sur le côté inférieur et le déplaçant, avec une couche de marchandises (3) reçue dans celui-ci, de l'emplacement d'empilage (9) vers l'emplacement de chargement (10) et/ou de l'emplacement de chargement (10) vers l'emplacement d'empilage (9), **caractérisé en ce qu'**avec un transporteur de pile (12) déplaçable de manière commandée, une pile de récipients remplis (5) composée de récipients à recouvrement (4) avec des couches de marchandises (3) reçues à l'intérieur et une pile de récipients tampons (6) composée de récipients à recouvrement vides (4) étant agencées en alternance au niveau de l'emplacement d'empilage (9), le transporteur de pile (12) présentant au moins deux réceptacles d'empilage (30, 31) agencés côte à côte et pouvant être positionnés en alternance au niveau de l'emplacement d'empilage (9), dont un est prévu pour une pile de récipients remplis (5) et un autre pour une pile de récipients tampons (6), le transporteur de pile (12) et les réceptacles de piles (30, 31) étant de préférence déplaçables transversalement par rapport à une direction de déplacement (24) de préférence linéaire du dispositif de manipulation (11).

10. Procédé selon la revendication 9, **caractérisé en ce que**, lors du stockage des couches de marchandises (3) et du montage d'une pile de récipients remplis (5), le dispositif de manipulation (11) prélève à chaque fois un récipient à recouvrement vide (4) de la pile de récipients tampons (6) au niveau de l'emplacement d'empilage (9), l'achemine vers l'emplacement de chargement (10), y charge une couche de marchandises (3) mise à disposition dans le récipient à recouvrement (4) et déplace le récipient à recouvrement (4) avec la couche de marchandises (3) reçue vers l'emplacement d'empilage (9) et sur la pile de récipients remplis (5) qui y a été agencée entre-temps, puis libère le récipient à recouvrement (4), le transporteur de pile (12) éloignant ensuite la pile de récipients remplis (5) et agençant la pile de récipients tampons (6) au niveau de l'emplacement d'empilage (9).

11. Procédé selon la revendication 9 ou 10, **caractérisé en ce que**, lors du déstockage des couches de marchandises (3), le dispositif de manipulation (11) prélève à chaque fois un récipient à recouvrement (4) avec une couche de marchandises reçue (3) au niveau de l'emplacement d'empilage (9) de la pile de récipients remplis (5) et le déplace vers l'emplacement de chargement (10), y décharge la couche de marchandises (3), puis ramène le récipient à recouvrement vide (4) à l'emplacement d'empilage (9) et le dépose sur la pile de récipients tampons (6) qui y a été agencée entre-temps, le transporteur de pile (12) éloignant ensuite la pile de récipients tampons (6) et agençant la pile de récipients remplis (5) au niveau de l'emplacement d'empilage (9).

12. Procédé selon les revendications 9, 10 ou 11, **caractérisé en ce que**, lors du stockage de couches de marchandises (3), le dispositif d'empilage (8), remplit entièrement ou partiellement la pile de supports remplis (5) avec des couches de marchandises (3) ; lors d'un remplissage partiel, après le stockage, des récipients à recouvrement vides (4) étant transférés sur la pile de supports (5) depuis la pile de récipients tampons (6) jusqu'à ce qu'une hauteur de pile prédéfinie soit atteinte et/ou, lors du déstockage de couches de marchandises (3), le dispositif d'empilage (8) vidant entièrement ou partiellement la pile de supports remplis (5) de couches de marchandises (3) ; lors d'un vidage partiel, après le déstockage, des récipients à recouvrement vides (4) étant transférés sur la pile de supports (5) depuis la pile de récipients tampons (6) jusqu'à ce qu'une hauteur d'empilement prédéfinie soit atteinte.

13. Procédé selon l'une quelconque des revendications 9 à 12, **caractérisé en ce qu'**à la fin du stockage et lorsqu'une hauteur de pile prédéfinie est atteinte, la pile de récipients remplis (5) est évacuée par le transporteur de pile (12) et une nouvelle pile de récipients tampons (6) est acheminée vers le transporteur de pile (12) et/ou, à la fin du déstockage, la pile de récipients tampons (6) est évacuée par le transporteur de pile (12) et une nouvelle pile de récipients remplis (5) est acheminée vers le transporteur de pile (12).

14. Procédé selon l'une quelconque des revendications 9 à 13, **caractérisé en ce que** l'évacuation d'une pile de récipients remplis (5) et l'acheminement d'une pile de récipients tampons (6) et/ou l'acheminement d'une pile de récipients remplis (5) et l'évacuation d'une pile de récipients tampons (6) depuis ou vers le transporteur de pile (12) se recouvrent temporellement avec un mouvement bidirectionnel du dispositif de manipulation (11) avec un récipient à recouvrement (4) entre l'emplacement d'empilage (9) et l'emplacement de chargement (10).

15. Procédé selon l'une quelconque des revendications 9 à 14, **caractérisé en ce que**, pendant l'évacuation et l'acheminement des piles de récipients (5, 6), un support de pile mobile (7) de la pile de récipients (5, 6) qui vient d'être démontée est transféré vers les réceptacles de pile (30, 31) du transporteur de pile (12).
